# EUROPEAN PATENT SPECIFICATION

(11) **EP 4 290 837 B1**
(45) Date of publication and mention of the grant of the patent: **23.09.2026**
(21) Application number: 23707845.6
(22) Date of filing: 07.03.2023
(51) Int. Cl.: H04M 1/02, G06F 1/16

(54) **HINGE STRUCTURE, AND FOLDABLE ELECTRONIC DEVICE COMPRISING SAME**
SCHARNIERSTRUKTUR UND KLAPPBARE ELEKTRONISCHE VORRICHTUNG DAMIT
STRUCTURE DE CHARNIÈRE, ET DISPOSITIF ÉLECTRONIQUE PLIABLE LA COMPRENANT

(30) Priority: 29.04.2022 KR 20220053645; 30.05.2022 KR 20220066247
(43) Date of publication of application: 13.12.2023
(73) Proprietor: Samsung Electronics Co., Ltd., Suwon-Si, Gyeonggi-do 16677 (KR)
(72) Inventor: KANG, Jaeho, Suwon-si, Gyeonggi-do 16677 (KR); KIM, Jungjin, Suwon-si, Gyeonggi-do 16677 (KR)
(74) Representative: Gulde & Partner
(86) International application number: PCT/KR2023/095009
(87) International publication number: WO 2023/211261

(56) References cited:
- WO-A1-2022/019621
- CN-U- 208 565 248
- CN-U- 213 711 587
- KR-A- 20190 108 600
- KR-A- 20220 039 675
- KR-A- 20220 050 462
- US-A1- 2020 383 215

## Description

### [Technical Field]

Various embodiments of the disclosure relate to a hinge structure and a foldable electronic device including the same.

### [Background Art]

A portable electronic device, such as a smartphone, may provide various functions, such as voice communication, playback of videos, and search through the internet, based on various kinds of applications. The user may intend to use the above-mentioned functions through a wider screen. However, as the screen becomes larger, portability may deteriorate. Accordingly, a foldable portable electronic device that may increase portability by utilizing a folded structure has been developed.

The foldable electronic device may be disposed such that adjacent housings and hinge structures are connected to each other and the hinge structures are rotated while supporting the housings while the housings are rotated at a specific angle.

Relevant examples of foldable electronic devices with hinge structures known in the prior art are described in documents WO 2022/019621 A1 and US 2020/383215 A1.

### [Disclosure]

### [Technical Problem]

The foldable electronic device may include a flexible display that is deformable. When a size of the flexible display is large, a repulsive force (or a force of intending to unfold the display in a folded state) may increase. The repulsive force may cause an error of a folding operation and an unfolding operation of the electronic device.

Various embodiments of the disclosure provide a hinge structure that may stably provide various holding angles without an increase in a thickness thereof, and a foldable electronic device including the same.

### [Technical Solution]

The invention is set out in the appended set of claims.

### [Advantageous Effects]

The hinge structure according to various embodiments and the foldable electronic device including the same may include the cam structures disposed on an inside or an outside of the fixing bracket without interferences with the rotary members whereby the areas of the cam structures may be sufficiently secured without an increase of a thickness of a terminal.

Furthermore, according to the hinge structure according to the embodiments and the foldable electronic device including the same, the elastic members may be disposed on an outside of the hinge housing whereby a spring force may be increased through an increase in the number and/or the sizes of the elastic members.

Furthermore, according to the hinge structure according to the embodiments and the foldable electronic device including the same according to the embodiments, a detent force that may stably maintain various holding angles may be increased by securing the areas of the cam structures and increasing the spring force even when the repulsive force of the display is increased.

Other various purposes and effects provided by the hinge structure according to various embodiments and the electronic device including the same may be mentioned according to the embodiments of the detailed description.

### [Description of Drawings]

FIG. 1 is a view illustrating an exploded perspective view of an electronic device according to an embodiment.
FIG. 2A is a view illustrating a flat state of an electronic device according to an embodiment, FIG. 2B is a view illustrating a folded state of an electronic device according to an embodiment, and FIG. 2C is a view illustrating a fully folded state of an electronic device according to an embodiment.
FIG. 3 is a perspective view of a front surface of an electronic device according to an embodiment.
FIG. 4 is a perspective view illustrating an example of a rear surface of an electronic device according to an embodiment.
FIG. 5 is an exploded perspective view of an electronic device according to an embodiment.
FIG. 6A is an exploded perspective view of rotary members and detents according to an embodiment, and FIG. 6B is a view illustrating a state, in which rotary members and detents are coupled to each other.
FIGS. 7A and 7B are views illustrating an operation of a first detent member included in a hinge structure according to an embodiment.
FIG. 8A is a view illustrating a fixing bracket according to an embodiment, and FIG. 8B is a view illustrating a first detent member according to an embodiment.
FIG. 9A is a cross-sectional view illustrating an example of a cam structure according to an embodiment, and FIG. 9B is a perspective view illustrating an example of a cam structure according to an embodiment.
FIG. 10 is a view illustrating a location of a cam structure according to an embodiment.
FIGS. 11A to 11C are views illustrating an operation of a cam structure according to an angle state of a hinge structure according to an embodiment.
FIG. 12 is a view illustrating a compression degree of an elastic member according to an angle state of a hinge structure according to an embodiment.
FIGS. 13A, 13B, and 13C are views illustrating various examples of elastic members of a hinge structure according to an embodiment.
FIG. 14 is a view illustrating a hinge structure and a hinge housing according to an embodiment.
FIG. 15 is a view illustrating a spring force according to a diameter and a wire diameter of an elastic member of a hinge structure according to an embodiment.
FIG. 16 is a plan view illustrating a hinge structure according to an embodiment.
FIG. 17 is a view for explaining extension directions of detent members according to an embodiment.
FIG. 18 illustrates views of an example of a fixed cam and a movable cam of a hinge structure according to an embodiment.
FIG. 19 illustrates views of another example of a fixed cam and a movable cam of a hinge structure according to an embodiment.
FIG. 20 illustrates views of another example of a fixed cam and a movable cam of a hinge structure according to an embodiment.
FIG. 21 is a front perspective view illustrating another example of a hinge structure according to an embodiment.
FIG. 22 is a rear perspective view illustrating another example of a hinge structure according to an embodiment.
FIG. 23 is a cross-sectional view illustrating another example of a hinge structure according to an embodiment.
FIG. 24 is a view illustrating a cam member illustrated in FIG. 23.
FIGS. 25A to 25C are views illustrating an operation of a cam structure according to a folding angle of a hinge structure according to an embodiment illustrated in FIGS. 23 and 24.
FIG. 26 is a view illustrating a relationship between a pressure of an elastic member and a pressure of a cam according to an embodiment.
FIGS. 27A and 27B are views illustrating a change in a pressure of a cam according to spacing distances between a fixed shaft and cams according to an embodiment.
FIGS. 28A and 28B are views illustrating a change in a pressure of a cam according to a spacing distance between an elastic member and a fixed shaft according to an embodiment.

### [Mode for Invention]

Hereinafter, various embodiments of the disclosure will be described with reference to the accompanying drawings. Since many features (except those of the independent claims) are optional only, the features of the preferred embodiments have been described in connection with "may". Nevertheless, said preferred embodiments have to understood to be disclosed as specific preferred combinations as shown in the drawings and therefore features shown in the drawings are to be understood as a real preferred combination for the present invention which however does not restrict the scope of the invention.

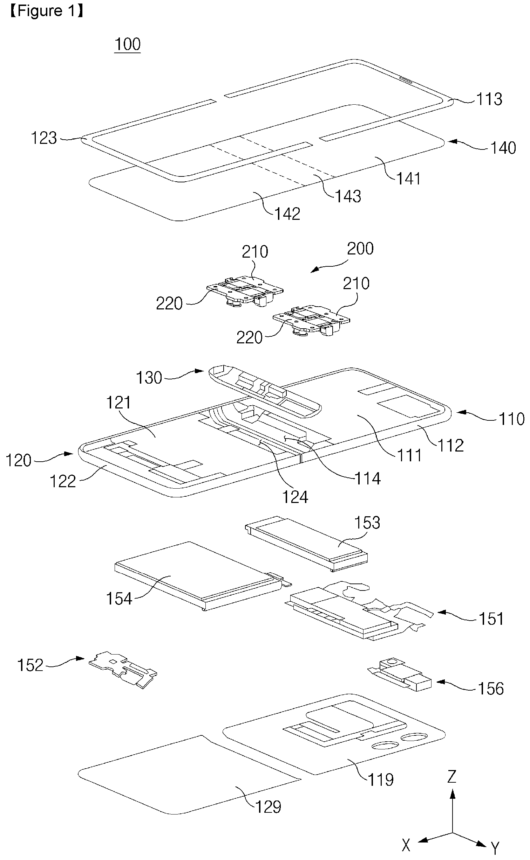

FIG. 1 is an exploded perspective view of an electronic device according to an embodiment.

Referring to FIG. 1, an electronic device 100 according to an embodiment includes a first housing 110, a second housing 120, a hinge housing 130 (optional), a display 140, and a hinge structure 200.

The first housing 110 is connected to the second housing 120 by using the hinge structure 200. The first housing 110 may include a first plate 111, on which the display 140 is seated, and a first frame 112 that surrounds at least a portion of the first plate 111. In an embodiment, the first frame 112 may define a portion of a surface (e.g., a side surface) of the electronic device 100. For example, at least a portion of a first area 141 of the display 140 and at least a portion of a folding area 143 of the display 140 may be disposed in the first plate 111. A first rotary member 210 of the hinge structure 200 may be connected to the first plate 111.

At least a portion of the first housing 110 may be bonded to the first area 141 of the display 140. Furthermore, at least a portion of a periphery of a front surface of the first housing 110 may be bonded to a periphery of the first area 141 of the display 140. In this regard, a bonding layer may be disposed between the first plate 111 of the first housing 110 and the first area 141 of the display 140.

At least a portion of an inside of the first housing 110 may have a hollow shape. A first circuit board 151, a first battery 153, and a camera module 156 may be disposed in an interior of the first housing 110. The first circuit board 151 and the first battery 153 may be electrically connected to a second circuit board 152 and a second battery 154 disposed in an interior of the second housing 120, through a flexible board (not illustrated). For example, the flexible board (not illustrated) may extend from a partial area of the first housing 110 to a partial area of the second housing 120 via the hinge housing 130. A partial area of the flexible board (not illustrated) may be located in an interior of the hinge housing 130. For example, a processor and a memory may be disposed in the first circuit board 151. For example, the first battery 153 and the first circuit board 151 may be disposed in the first plate 111.

The first housing 110 may be configured such that at least a portion thereof is formed of a metallic material or at least a portion thereof is formed of a nonmetallic material. The first housing 110 may be formed of a material having a specific strength to support at least a portion of the display 140. In an embodiment, a portion of the first housing 110, which faces the second housing 120, may include a recessed part 114, at least a portion of which has a specific curvature such that the hinge housing 130 is disposed therein.

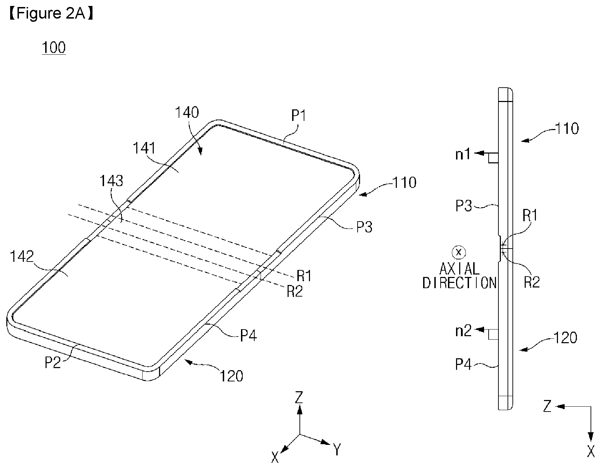

The first housing 110 may include a first decoration member 113 that surrounds a periphery of the display 140, and a first rear cover 119 that defines a surface of the electronic device 100 while facing the first plate 111. For example, the first decoration member 113 may be disposed to cover a peripheral portion of the first area 141 and a periphery of a portion of the folding area 143 of the display 140. For example, the first rear cover 119 may define a rear surface of the electronic device 100 in a flat state (e.g., see FIG. 2A), and the display 140 may define a front surface of the electronic device 100.

The second housing 120 is connected to the first housing 110 by using the hinge structure 200. The second housing 120 may include a second plate 121, on which the display 140 is seated, and a second frame 122 that surrounds at least a portion of the second plate 121. For example, the second frame 122 may define a portion of a surface (e.g., a side surface) of the electronic device 100. For example, at least a portion of a second area 142 and at least a portion of the folding area 143 may be disposed in the second plate 121. A second rotary member 220 of the hinge structure 200 may be connected to the second plate 121.

At least a portion of the second housing 120 may be bonded to the second area 142 of the display 140. Furthermore, at least a portion of a periphery of a front surface of the second housing 120 may be bonded to a periphery of the second area 142 of the display 140. In this regard, a bonding layer may be disposed between the second plate 121 of the second housing 120 and the second area 142 of the display 140.

At least a portion of an inside of the second housing 120 may have a hollow shape. A second circuit board 152 and the second battery 154 may be disposed in an interior of the second housing 120. The second circuit board 152 and the second battery 154 may be electrically connected to the first circuit board 151 and/or the first battery 153 disposed in an interior of the first housing 110, through a flexible board (not illustrated). For example, the second battery 154 and the second circuit board 152 may be disposed in the second plate 121.

The second housing 120 may be configured such that at least a portion thereof is formed of a metallic material or at least a portion thereof is formed of a nonmetallic material. The second housing 120 may be formed of a material having a specific strength to support at least a portion of the display 140. In an embodiment, a portion of the second housing 120, which faces the first housing 110, may include a recessed part 124, at least a portion of which has a specific curvature such that the hinge housing 130 is disposed therein.

The second housing 120 may include a second decoration member 123 that surrounds a periphery of the display 140, and a second rear cover 129 that defines a surface of the electronic device 100 while facing the second plate 121. For example, the second decoration member 123 may be disposed to cover a peripheral portion of the second area 142 and a periphery of a portion of the folding area 143 of the display 140. For example, the second rear cover 129 may define a rear surface of the electronic device 100 in a flat state (e.g., see FIG. 2A), and the display 140 may define a front surface of the electronic device.

The hinge housing 130 may be disposed in the recessed parts 114 and 124 of the first housing 110 and the second housing 120. The hinge housing 130 may have a shape that extends long in the y axis direction as a whole. A boss for fixing the hinge structure 200 may be disposed in a partial area of an inner surface of the hinge housing 130.

At least a portion of the display 140 is flexible. For example, the display 140 may include the first area 141, at least a portion of which is disposed on the first housing 110, the second area 142, at least a portion of which is disposed on the second housing 120, and the folding area 143 located between the first area 141 and the second area 142.

The first area 141 and the second area 142 may be substantially flat, and at least a portion of the folding area 143 may be formed to be deformed to be flat or curved. For example, the first area 141 and the second area 142 may be maintained in a flat state regardless of a state of the electronic device 100, and the folding area 143 may be deformed to be curved or flat in correspondence to the state of the electronic device 100.

The display 140 may include various layers. For example, the display 140 may include an external protection layer (or a glass layer or a polymer layer) of a specific size having a specific transparency, a display panel layer disposed under the external protection layer to display a screen, and a first rear surface layer disposed under the display panel layer. The first rear surface layer may include an impact absorbing layer (or an embossing layer) and a heat dissipating layer (or a metal sheet layer). Additionally or alternatively, the first rear surface layer may further include an electromagnetic induction panel (e.g., a digitizer). The display 140 may further include a second rear surface layer disposed under the first rear surface layer. At least a portion of the second rear surface layer may include at least one metal layer (or a metal sheet) formed of a metallic material. The second rear surface layer may include a specific pattern (e.g., a lattice pattern or a slit pattern) such that at least a portion thereof may be bent. Furthermore, at least a portion of the second rear surface layer may be formed of another material (e.g., a polymer material, rubber, or a leather material) that may be bent.

A plurality of hinge structures 200 may be disposed in the hinge housing 130, and the plurality of hinge structures 200 may have similar structures and shapes. Although FIG. 1 illustrates a structure, in which two hinge structures 200 are disposed in the hinge housing 130 as an example, the disclosure is not limited thereto, and three or more hinge structures 200 may be mounted on the hinge housing 130.

According to the invention, the hinge structure 200 includes the first rotary member 210 connected to the first housing 110 and the second rotary member 220 connected to the second housing 120. The hinge structure 200 is configured such that the first rotary member 210 and the second rotary member 220 are rotatable about rotation axes (e.g., axes that are parallel to the y axis direction) thereof. The first rotary member 210 is rotated together with the first housing 110, and the second rotary member 220 is rotated together with the second housing 120. For example, when the first housing 110 and the second housing 120 are folded or unfolded, the first rotary member 210 and the second rotary member 220 may be rotated about the rotation axes thereof.

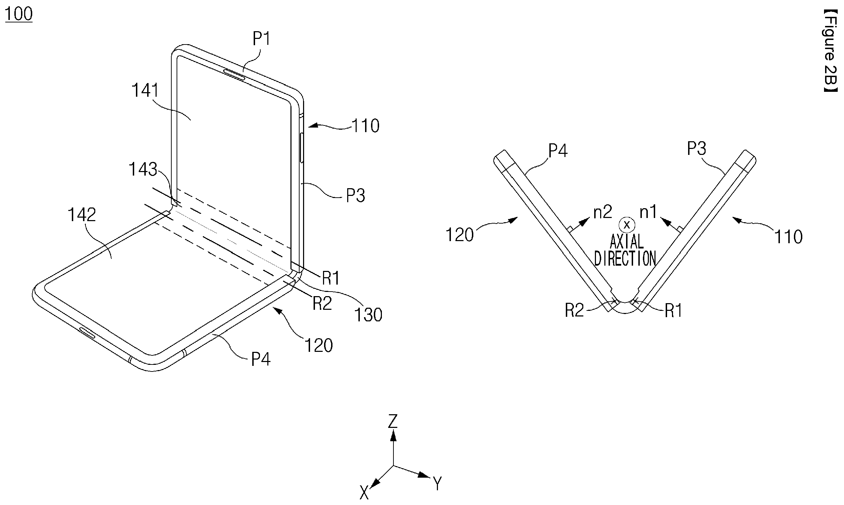

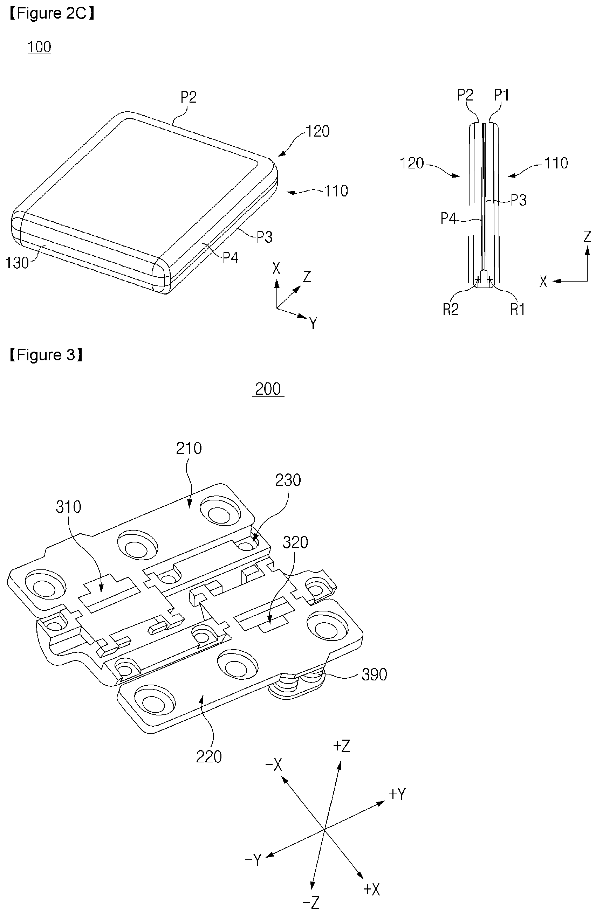

FIG. 2A is a view illustrating a flat state of the electronic device according to an embodiment. FIG. 2B is a view illustrating a folded state of the electronic device according to an embodiment. FIG. 2C is a view illustrating a fully folded state of the electronic device according to an embodiment.

Referring to FIGS. 2A, 2B, and 2C, the electronic device 100 according to an embodiment may have a structure, in which the first housing 110 and the second housing 120 are rotated in opposite directions about rotation axes R1 and R2 through the hinge structure (e.g., the hinge structure 200 of FIG. 1). The electronic device 100 may perform a folding operation (e.g., a deformation operation in a sequence of FIGS. 2A, 2B, and 2C) or an unfolding operation (e.g., a deformation operation in a sequence of FIGS. 2C, 2B, and 2A). For example, in a folding operation performed from the flat state (a state of FIG. 2A) with reference to FIGS. 2A to 2C, the first housing 110 may be rotated in the counterclockwise direction and the second housing 120 may be rotated in the clockwise direction.

In an embodiment, an axial direction that is parallel to the rotation axes R1 and R2 of the first housing 110 and the second housing 120 may be defined. The axial direction may be ruled as an extension direction of the folding area 143 of the display 140. For example, the axial direction may be ruled as a long side direction of the folding area 143. For example, the axial direction may mean a direction that is parallel to the y axis.

To describe a state of the electronic device 100 according to various embodiments of the disclosure, a first periphery P1 of the electronic device 100 and a second periphery P2 of the electronic device 100, which are parallel to the axial direction, may be defined, and a third periphery P3 of the electronic device 100 and a fourth periphery P4 of the electronic device 100, which are perpendicular to the axial direction, may be defined. For example, the first periphery P1 and the third periphery P3 may include a portion of the first frame (e.g., the first frame 112 of FIG. 1) of the first housing 110. For example, the second periphery P2 and the fourth periphery P4 may include a portion of the second frame (e.g., the second frame 122 of FIG. 1) of the second housing 120.

The flat state illustrated in FIG. 2A may mean a state, in which the folding area 143 of the display 140 is substantially flat. For example, a flat state may include a state, in which the first area 141 and the second area 142 of the display 140 are flat surfaces that face the same direction. For example, the flat state may include a state, in which a first normal vector n1 of the first area 141 of the display 140 and a second normal vector n2 of the second area 142 are parallel to each other. For example, the flat state may include a state, in which the third periphery P3 and the fourth periphery P4 form one substantially straight line. For example, the flat state may include a state, in which the third periphery P3 and the fourth periphery P4 form about 180 degrees.

An intermediate folded state (or an intermediate state or a folded state) illustrated in FIG. 2B may mean an arbitrary state between the flat state and the fully folded state. For example, the intermediate folded state may be construed as, among the plurality of folded states, states except for the fully folded state. The intermediate folded state may include states, in which the folding area 143 of the display 140 is curved. For example, the intermediate folded state may include a state, in which the first normal vector n1 of the first area 141 and the second normal vector n2 of the second area 142 form a specific angle other than or deviating from about 180 degrees. For example, the intermediate folded state may include a state, in which the third periphery P3 and the fourth periphery P4 form the specific angle other than or deviating from about 180 degrees.

The fully folded state illustrated in FIG. 2C may mean a state, in which the first periphery P1 and the second periphery P2 substantially contact each other. For example, a curved surface defined by the folding area 143 of the fully folded state may have a curvature (or a maximum curvature) that is larger than that of a curved surface defined by the folding area 143 in the intermediate folded state.

According to an embodiment illustrated in FIG. 2C, in the fully folded state, the third periphery P3 and the fourth periphery P4 may be partially spaced apart from each other. However, in the fully folded state, the disposition of the first housing 110 and the second housing 120 are not limited to the illustrated embodiment. According to various embodiments, the electronic device 100 may have a structure, in which the third periphery P3 and the fourth periphery P4 substantially contact each other in the fully folded state. For example, in the fully folded state, the third periphery P3 and the fourth periphery P4 may face each other while being parallel to each other.

In various embodiments, the intermediate folded state of the electronic device 100 may be construed to include arbitrary states defined between the flat state and the fully folded state. For example, the intermediate folded state may include states, in which an included angle between the third periphery P3 and the fourth periphery P4 is larger than about 0 degrees and smaller than about 180 degrees.

In various embodiments, at least a portion of the hinge housing 130 may define an external appearance (or a surface) of the electronic device 100 in the intermediate folded state and the fully folded state. For example, as illustrated in FIGS. 2B and 2C, the hinge housing 130 may be visually exposed between the first housing 110 and the second housing 120 when the electronic device 100 is in the intermediate folded state or the fully folded state.

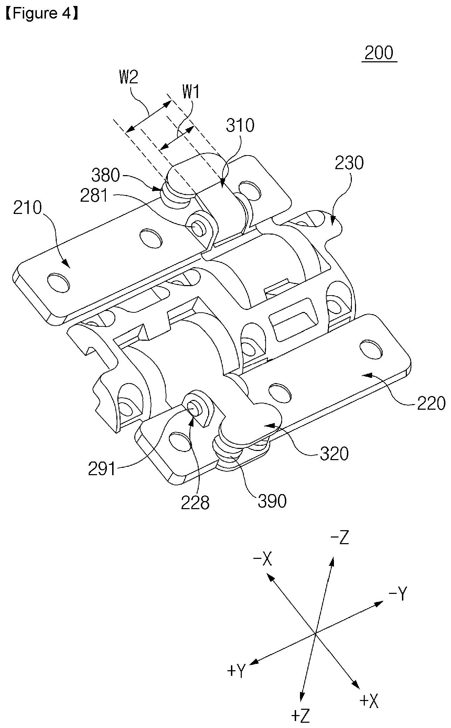

FIG. 3 is a front perspective view illustrating the hinge structure according to an embodiment. FIG. 4 is a rear perspective view illustrating the hinge structure according to an embodiment.

Referring to FIGS. 3 and 4, the hinge structure 200 of the electronic device according to an embodiment includes the rotary members 210 and 220, a fixing bracket 230, detent members 310 and 320, and, optionally, elastic members 380 and 390.

The rotary members 210 and 220 may form a driving locus of the display (e.g., the display 140 of FIG. 1). The rotary members 210 and 220 include the first rotary member 210 and the second rotary member 220. The first rotary member 210 may be coupled to the fixing bracket 230. The first rotary member 210 may be coupled to one side of the fixing bracket 230 to be rotated (e.g., the clockwise direction or the counterclockwise direction with respect to the Y axis) within a first angle range. The second rotary member 220 may be coupled to an opposite side of the fixing bracket 230 to be rotated (e.g., the counterclockwise direction or the clockwise direction with respect to the Y axis) within a second angle range. Sizes of the first angle range and the second angle range may be the same, and directions thereof may be opposite to each other. When the electronic device (e.g., the electronic device 100 of FIG. 1) is in the flat state, a periphery of the first rotary member 210 in the +X axis direction may be disposed to be adjacent to a periphery of the second rotary member 220 in the -X axis direction. When the electronic device is in the folded state, an upper surface (e.g., a surface that faces the +Z axis direction) of the first rotary member 210 and an upper surface (e.g., a surface that face the +Z axis direction) of the second rotary member 220 may be disposed to face each other.

At least a portion of the fixing bracket 230 may be disposed and fixed in an empty space on an inside of the hinge housing (e.g., the hinge housing 130 of FIG. 1). At least a portion of the fixing bracket 230 may have a size corresponding to the empty space on the inside of the hinge housing. Furthermore, at least a portion of the fixing bracket 230 may have a shape corresponding to the empty space on the inside of the hinge housing, for example, a semi-cylindrical shape. The fixing bracket 230 may include at least one hole, into which at least one boss formed in the hinge housing may be inserted. One side of the first rotary member 210 may be disposed on one side of the fixing bracket 230 to be rotatable within a specific angle range, and one side of the second rotary member 220 may be disposed on an opposite side of the fixing bracket 230 to be rotatable within a specific angle range.

The detent members 310 and 320 may be connected to the rotary members 210 and 220, for example, mechanically connected, e.g. through fixing pins 281 and 291, and may be rotated about the fixing pins 281 and 291 used as rotary shafts. The detent members 310 and 320 may implement detent operations while pivoting on sides of the rotary members 210 and 220 in correspondence to rotation of the rotary members 210 and 220.

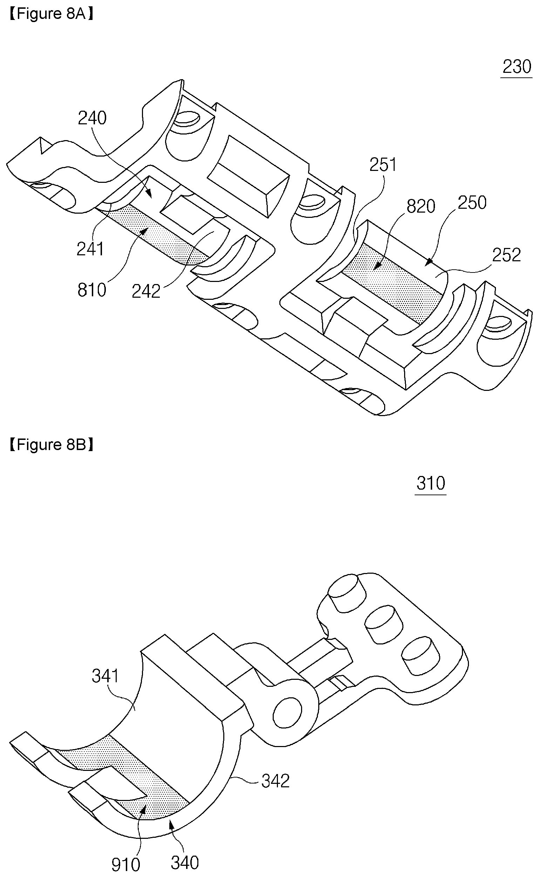

As an example, the detent members 310 and 320 may include the first detent member 310 connected to the first rotary member 210 through the first fixing pin 281 and the second detent member 320 connected to the second rotary member 220 through the second fixing pin 291. The first detent member 310 may include at least one first movable cam (e.g., a first movable cam 910 of FIG. 8B). The first movable cam may implement a detent operation while being engaged with the first fixed cam (e.g., a first fixed cam 810 of FIG. 8A) of the fixing bracket 230. The second detent member 320 may include at least one second movable cam. The second movable cam may implement a detent operation while being engaged with the second fixed cam (e.g., a second fixed cam 820 of FIG. 8A) of the fixing bracket 230. The first movable cam and the second movable cam engaged with the fixed cams may implement detents in a cam scheme during a folding and unfolding operation of the electronic device 100. The first detent member 310 and the second detent member 320 may provide a hinge force (or a detent force) of the electronic device by using the movable cams engaged with the fixed cams.

According to an embodiment, in the first detent member 310, widths of an overlapping area that overlaps the first elastic member 380 and a coupling area to which the first fixing pin 281 is coupled may be the same or different. For example, a width W1 of the coupling area of the first detent member 310 may be smaller than a width W2 of the overlapping area of the first detent member 310. In the second detent member 320, widths of an overlapping area that overlaps the second elastic member 390 and a coupling area to which the second fixing pin 291 is coupled may be the same or different. For example, a width of the coupling area of the second detent member 320 may be smaller than a width of the overlapping area of the second detent member 320. Accordingly, a size of at least any one of the first detent member 310 and the second detent member 320 may be reduced whereby material costs may be reduced.

The elastic members 380 and 390 may be disposed between the rotary members 210 and 220 and the detent members 310 and 320. For example, the elastic members 380 and 390 may be directly disposed between the rotary members 210 and 220 and the detent members 310 and 320 to be in direct contact with each other, respectively. As an example, the elastic members 380 and 390 may include the first elastic member 380 disposed between the first rotary member 210 and the first detent member 310, and the second elastic member 390 disposed between the second rotary member 220 and the second detent member 320. The first elastic member 380 may be compressed by the first detent member 310 in a process of the electronic device being rotated from the folded state (or the flat state) to the flat state (or the folded state). The second elastic member 390 may be compressed by the second detent member 320 in a process of the electronic device being rotated from the folded state (or the flat state) to the flat state (or the folded state). By the compression of the first elastic member 380 and the second elastic member 390, a detent force for maintaining the hinge structure 200 in a specific state may be generated.

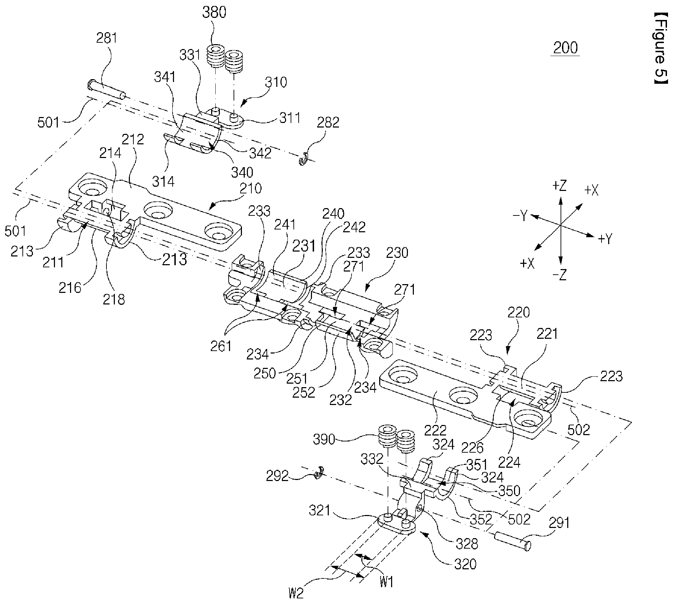

FIG. 5 is an exploded perspective view of the hinge structure according to an embodiment.

Referring to FIGS. 3 to 5, the hinge structure 200 includes the fixing bracket 230, the first rotary member 210, the second rotary member 220, the first detent member 310, the second detent member 320, the first elastic member 380, and, optionally, the second elastic member 390.

At least a portion of the fixing bracket 230 may be disposed in an interior of the hinge housing (e.g., the hinge housing 130 of FIG. 1). The first rotary member 210 and the second rotary member 220 may be coupled to the fixing bracket 230 to be rotatable.

The fixing bracket 230 includes a first fixed rail 240 and a second fixed rail 250. The first fixed rail 240 may include a first rail inner-surface 241, and a first rail outer-surface 242 that faces the first rail inner-surface 241, e.g. in an opposite direction away from the first rail inner-surface 241. At least a portion of each of the first rail inner-surface 241 and the first rail outer-surface 242 may have an arc shape (or rotationally curved surface). The first rail inner-surface 241 may be formed to face the +Z axis direction and to face a coupling surface 216 of a first coupling area 211 of the first rotary member 210. The first rail inner-surface 241 may provide a path, along which the first rotary member 210 may be moved. The first rail outer-surface 242 may be formed to face the -Z axis direction to face the first rail inner-surface 241, and to face a first inner peripheral surface 341 of the first detent member 310. The first rail outer-surface 242 may provide a path, along which a first movable rail 340 of the first detent member 310 may be moved.

The second fixed rail 250 may include a second rail inner-surface 251 and a second rail outer-surface 252 that faces the second rail inner-surface 251, e.g. in an opposite direction away from the second rail inner-surface 251. At least a portion of each of the second rail inner-surface 251 and the second rail outer-surface 252 may have an arc shape (or rotationally curved surface). The second rail inner-surface 251 may be spaced apart from the first rail inner-surface 241 in the +Y axis direction. The second rail inner-surface 251 may be formed to face the +Z axis direction and to face a coupling surface 226 of a second coupling area 221 of the second rotary member 220. The second rail inner-surface 251 may provide a path, along which the second rotary member 220 may be moved. The second rail outer-surface 252 may be formed to face the -Z axis direction to face the second rail inner-surface 251, and to face a second inner peripheral surface 351 of the second detent member 320. The second rail outer-surface 252 may provide a path, along which a second movable rail 350 of the second detent member 320 may be moved.

The fixing bracket 230 may include a first recess 231 formed by recessing at least a portion of the first rail inner-surface 241 toward the first rail outer-surface 242, and a second recess 232 formed by recessing at least a portion of the second rail inner-surface 251 toward the second rail outer-surface 252. The first coupling area 211 of the first rotary member 210 may be disposed in the first recess 231, and the second coupling area 221 of the second rotary member 220 may be disposed in the second recess 232. The first recess 231 and the second recess 232 may be formed at locations that are spaced apart from each other in the +Y axis direction and the -Y axis direction.

The fixing bracket 230 may include a first guide rail 233 for guiding a rotation path of the first rotary member 210, and a second guide rail 234 for guiding a rotation path of the second rotary member 220. A first guide area 213 of the first rotary member 210 may be accommodated in the first guide rail 233. The first guide rail 233 may be formed on an inner wall of the fixing bracket 230. The first guide rail 233 may protrude in a direction that faces the first recess 231. A second guide area 223 of the second rotary member 220 may be accommodated in the second guide rail 234. The second guide rail 234 may be formed on an inner wall of the fixing bracket 230. The second guide rail 234 may protrude in a direction that faces the second recess 232.

The first rotary member 210 may be configured to be rotated in a specific path relatively with respect to the fixing bracket 230 fixedly disposed in the hinge housing when the first housing (e.g., the first housing 110 of FIG. 1) is folded or unfolded. Because at least a portion of the first rotary member 210 is accommodated in the first recess 231 of the fixing bracket 230, the first rotary member 210 may be rotated about a first rotation axis 501 in a state, in which movement thereof in the +Y axis and -Y axis directions is constrained. The first rotary member 210 may include the first coupling area 211, a first extension area 212, and the first guide area 213.

The first coupling area 211 may be coupled to the fixing bracket 230 to be rotatable. At least a portion of the first coupling area 211 may be accommodated in the first recess 231 of the fixing bracket 230. The first coupling area 211 may include the first coupling surface 216 formed to have a substantially semi-circular shape. The first coupling area 211 may be rotated along the first rail inner-surface 241.

The first extension area 212 may be connected to the first housing. The first extension area 212 may be folded or unfolded together with the first housing when the electronic device (e.g., the electronic device 100 of FIG. 1) is folded or unfolded.

The first guide area 213 may be formed to have a substantially semi-circular shape. For example, the first guide area 213 may have a semi-circular shape having a diameter that is larger than that of the first coupling area 211. The first guide area 213 may guide a rotation path of the first rotary member 210 together with the first guide rail 233. The first guide area 213 may protrude from one side of the first coupling area 211 in the +Y axis direction, and may protrude from an opposite side of the first coupling area 211 in the -Y axis direction. At least a portion of the first guide area 213 may be accommodated in the first guide rail 233.

The second rotary member 220 may be configured to be rotated in a specific path relatively with respect to the fixing bracket 230 fixedly disposed in the hinge housing when the second housing (e.g., the second housing 120 of FIG. 1) is folded or unfolded. Because at least a portion of the second rotary member 220 is accommodated in the second recess 232 of the fixing bracket 230, the second rotary member 220 may be rotated about a second rotation axis 502 in a state, in which movement thereof in the +Y axis and -Y axis directions is constrained. The second rotary member 220 may include the second coupling area 221, a second extension area 222, and the second guide area 223.

The second coupling area 221 may be coupled to the fixing bracket 230 to be rotatable. At least a portion of the second coupling area 221 may be accommodated in the first recess 231 of the fixing bracket 230. The second coupling area 221 may include the second coupling surface 226 formed to have a substantially semi-circular shape. The second coupling area 221 may be rotated along the second rail inner-surface 251.

The second extension area 222 may be connected to the second housing. The first extension area 212 may be folded or unfolded together with the first housing when the electronic device is folded or unfolded.

The second guide area 223 may be formed to have a substantially semi-circular shape. For example, the second guide area 223 may have a semi-circular shape having a diameter that is larger than that of the second coupling area 221. The second guide area 223 may guide a rotation path of the second rotary member 220 together with the second guide rail 234. The second guide area 223 may protrude from one side of the second coupling area 221 in the +Y axis direction, and may protrude from an opposite side of the second coupling area 221 in the -Y axis direction. At least a portion of the second guide area 223 may be accommodated in the second guide rail 234.

The first detent member 310 may include the first movable rail 340 and a first detent plate 311. The first movable rail 340 may include the first inner peripheral surface 341, and a first outer peripheral surface 342 that faces the first inner peripheral surface 341. At least a portion of each of the first inner peripheral surface 341 and the first outer peripheral surface 342 may have an arc shape (or rotationally curved surface). The first inner peripheral surface 341 may be formed to face the +Z axis direction and to face the first rail outer-surface 242 of the first fixed rail 240. The first outer peripheral surface 342 may face the -Z axis direction that faces the hinge housing. The first movable rail 340 may be moved along the first rail outer-surface 242 of the first fixed rail 240 when the first rotary member 210 is rotated. A first rail boss 314 may be formed in one area of the first movable rail 340. The first rail boss 314 may be disposed on an opposite side of the first detent plate 311. The first rail boss 314 may be formed to have a shape corresponding to a first fastening hole 261 of the fixing bracket 230. The first detent member 310 may extend from the first movable rail 340 toward the first rotary member 210. The first detent plate 311 may be disposed to overlap at least a portion of the first extension area 212 of the first rotary member 210. A first bridge area 331 may be disposed between the first detent plate 311 and the first movable rail 340. For example, the first bridge area 331 may have a "T" shape. The first bridge area 331 may be inserted into a first bridge hole 214 of the first rotary member 210.

The first detent member 310 may be coupled to the first rotary member 210 through the first fixing pin 281. The first fixing pin 281 may be inserted into a first fixing hole 318 that passes through the first detent member 310, and a first fastening hole 218 of the first rotary member 210. Because a first fixing clip 282 is coupled to one side (or an opposite side of a head of the first fixing pin 281) of the first fixing pin 281, the first fixing pin 281 may be fixed to the first detent member 310 and the first rotary member 210. The first fixing clip 282 may function to fix the first fixing pin 281 such that the first fixing pin 281 is prevented from being separated in an opposite direction (e.g., -Y axis direction) to an insertion direction (e.g., the +Y axis direction) of the first fixing pin 281.

The second detent member 320 may include the second movable rail 350 and a second detent plate 321. The second movable rail 350 may include the second inner peripheral surface 351, and a second outer peripheral surface 352 that faces the second inner peripheral surface 351. At least a portion of each of the second inner peripheral surface 351 and the second outer peripheral surface 352 may have an arc shape (or rotationally curved surface). The second inner peripheral surface 351 may be formed to face the +Z axis direction and to face the second rail outer-surface 252 of the second fixed rail 250. The second outer peripheral surface 352 may face the -Z axis direction that faces the hinge housing. The second movable rail 350 may be moved along the second rail outer-surface 252 of the second fixed rail 250 when the second rotary member 220 is rotated. A second rail boss 324 may be formed in one area of the second movable rail 350. The second rail boss 324 may be disposed on an opposite side of the second detent plate 321. The second rail boss 324 may be formed to have a shape corresponding to a second fastening hole 271 of the fixing bracket 230. The second detent plate 321 may extend from the second movable rail 350 toward the second rotary member 220. The second detent plate 321 may be disposed to overlap at least a portion of the second extension area 222 of the second rotary member 220. A second bridge area 332 may be disposed between the second detent plate 321 and the second movable rail 350. For example, the second bridge area 332 may have a "T" shape. The second bridge area 332 may be inserted into a second bridge hole 224 of the second rotary member 220.

The second detent member 320 may be coupled to the second rotary member 220 through the second fixing pin 291. The second fixing pin 291 may be inserted into a second fixing hole 328 that passes through the second detent member 320, and a second fastening hole 228 of the second rotary member 220. Because a second fixing clip 292 is coupled to an opposite side (or an opposite side of a head of the second fixing pin 291) of the second fixing pin 291, the second fixing pin 291 may be fixed to the second detent member 320 and the second rotary member 220. The second fixing clip 292 may function to fix the second fixing pin 291 such that the second fixing pin 291 is prevented from being separated in an opposite direction (e.g., +Y axis direction) to an insertion direction (e.g., the -Y axis direction) of the second fixing pin 291.

The plurality of elastic members 380 and 390 may include the first elastic member 380 and the second elastic member 390.

The first elastic member 380 may be disposed, in particular directly disposed, between the first detent member 310 and the first rotary member 210. The first elastic member 380 may be disposed between the first detent plate 311 and the first extension area 212 of the first rotary member 210. The first elastic member 380 may provide an elastic force that is necessary for a cam operation of the first detent member 310. The first elastic member 380 may be compressed in a direction, in which the first detent plate 311 becomes closer to the first extension area 212 of the first rotary member 210, in a process of the electronic device being rotated from the fully folded state to the flat state. The first elastic member 380 may provide an elastic force in a direction, in which the first detent plate 311 becomes farther from the first extension area 212 of the first rotary member 210. In contrast, the first elastic member 380 may be compressed in a direction, in which the first detent plate 311 becomes closer to the first extension area 212 of the first rotary member 210, in a process of the electronic device being rotated from the flat state to the fully folded state. The first elastic member 380 may provide an elastic force in a direction, in which the first detent plate 311 becomes farther from the first extension area 212 of the first rotary member 210. The first elastic member 380, for example, may be a spring, a leaf spring, or a disk spring, and the disclosure is not limited thereto.

The second elastic member 390 may be disposed, in particular directly disposed, between the second detent member 320 and the second rotary member 220. The second elastic member 390 may be disposed between the second detent plate 321 and the second extension area 222 of the second rotary member 220. The second elastic member 390 may provide an elastic force that is necessary for a cam operation of the second detent member 320. The second elastic member 390 may be compressed in a direction, in which the second detent plate 321 becomes closer to the second extension area 222 of the second rotary member 220, in a process of the electronic device being rotated from the fully folded state to the flat state. The second elastic member 390 may provide an elastic force in a direction, in which the second detent plate 321 becomes farther from the second extension area 222 of the second rotary member 220. In contrast, the second elastic member 390 may be compressed in a direction, in which the second detent plate 321 becomes closer to the second extension area 222 of the second rotary member 220, in a process of the electronic device being rotated from the flat state to the fully folded state. The second elastic member 390 may provide an elastic force in a direction, in which the second detent plate 321 becomes farther from the second extension area 222 of the second rotary member 220. The second elastic member 390, for example, may be a spring, a leaf spring, or a disk spring, and the disclosure is not limited thereto.

The first elastic member 380 and the second elastic member 390 may have the same characteristics to provide the same hinge force (or the same detent force) during rotation of the electronic device. As an example, the first elastic member 380 and the second elastic member 390 may have spring structures having the same or similar lengths, thicknesses, and/or diameters. As another example, the first elastic member 380 and the second elastic member 390 may have different lengths, thicknesses, and diameters (e.g., the first elastic member 380 has a first length, a first thickness, and a first diameter, and the second elastic member 390 has a second length (e.g., a second length that is different from the first length), a second thickness (e.g. a second thickness that is different from the first thickness), and a second diameter (e.g., a diameter that is different from the second diameter). Even though the first elastic member 380 and the second elastic member 390 have different lengths, thicknesses, and/or diameters, the first elastic member 380 and the second elastic member 390 may have the same or similar elastic forces.

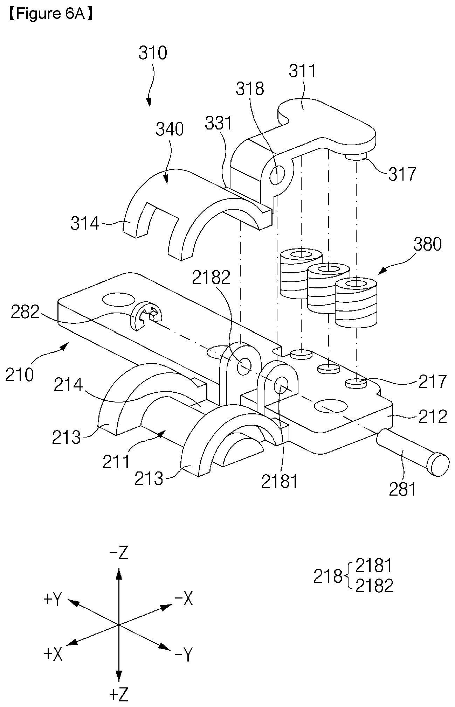

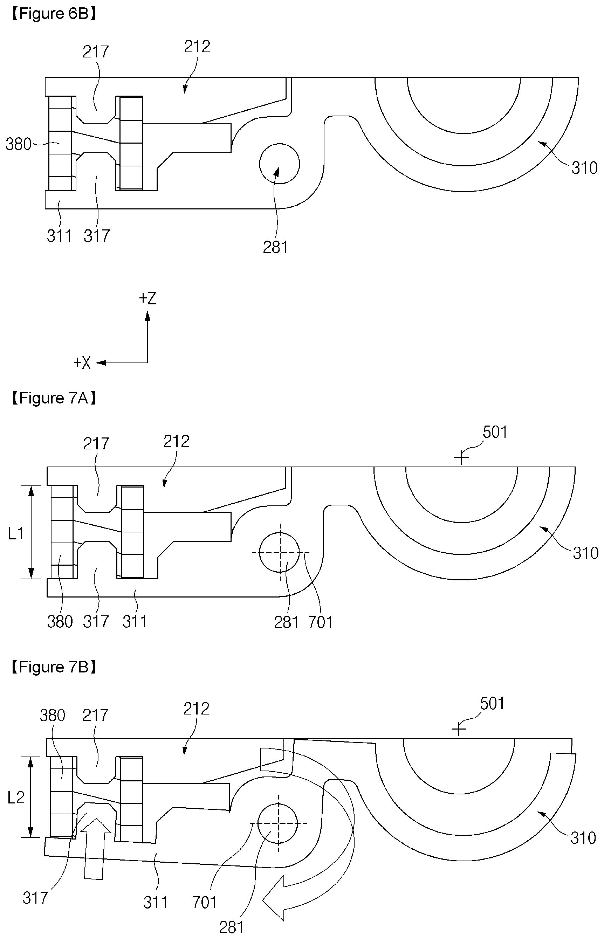

FIG. 6A is an exploded perspective view of the rotary members and the detents according to an embodiment. FIG. 6B is a view illustrating a state, in which the rotary members and the detents are coupled to each other, according to an embodiment. FIGS. 6A and 6B illustrate the first rotary member 210 and the first detent member 310 as an example, and the second rotary member (e.g., the second rotary member 220 of FIG. 5) and the second detent member (e.g., the second detent member 320 of FIG. 5) may be the same as or similar to the first rotary member and the first detent member illustrated in FIGS. 6A and 6B.

Referring to FIGS. 5, 6A, and 5B, the hinge structure according to an embodiment includes the first rotary member 210 and the first detent member 310.

The first rotary member 210 may include the first coupling area 211 and the first extension area 212. The first coupling area 211 may be disposed on one side (e.g., a side that faces the +X axis) of the first extension area 212. The first coupling area 211 may be disposed to overlap the first movable rail 340 of the first detent member 310. The first guide areas 213 disposed to be spaced apart from each other while the first coupling area 211 being interposed therebetween may extend from the first extension area 212 in the +X axis direction.

The first detent member 310 may be coupled to the first rotary member 210 through the first fixing pin 281. The first fixing pin 281 may be inserted into the first fixing hole 318 that passes through the first detent member 310, and the first fastening hole 218 of the first rotary member 210. The first fastening hole 218 may include a first sub fastening hole 2181 that is adjacent to the head of the first fixing pin 281, and a second sub fastening hole 2182 that is adjacent to the first fixing clip 282. The first sub fastening hole 2181, the first fixing hole 318, and the second sub fastening hole 2182 may be arranged in a row in a sequence of the first sub fastening hole 2181, the first fixing hole 318, and the second sub fastening hole 2182. The first fixing pin 281 may be inserted sequentially through the first sub fastening hole 2181, the first fixing hole 318, and the second sub fastening hole 2182, and thus the first fixing pin 281 may be coupled to the first detent member 310 and the first rotary member 210.

The first bridge area 331 may be formed between the first detent plate 311 of the first detent member 310, and the first movable rail 340. The first bridge area 331 may be inserted into the first bridge hole 214 disposed between the first coupling area 211 and the first extension area 212.

The first elastic member 380 may be disposed between the first rotary member 210 and the first detent member 310. The first elastic member 380 may be disposed between the first extension area 212 of the first rotary member 210 and the first detent plate 311 of the first detent member 310. A first fastening boss 217 that protrudes toward the first detent plate 311 may be formed in the first extension area 212 of the first rotary member 210. A second fastening boss 317 that protrudes toward the first extension area 212 of the first rotary member 210 may be formed in the first detent plate 311 of the first detent member 310. A protrusion direction of the second fastening boss 317 may be an opposite direction to a protrusion direction of the first fastening boss 217. For example, the first fastening boss 217 may protrude in the -Z axis direction, and the second fastening boss 317 may protrude in the +Z axis direction. One end of the first elastic member 380 may be fastened to the first fastening boss 217, and an opposite end of the first elastic member 380 may be coupled to the second fastening boss 317.

FIGS. 7A and 7B are views illustrating an operation of the first detent member included in the hinge structure according to an embodiment. FIGS. 7A and 7B illustrate the first detent member 310 as an example, and the second detent member (e.g., the second detent member 320 of FIG. 5) may be the same as or similar to the first detent member illustrated in FIGS. 7A and 7B.

Referring to FIGS. 7A and 7B, the first detent member 310 may be coupled to the first rotary member (e.g., the first rotary member 210 of FIG. 5) through the first fixing pin 281. The first rotary member may be rotated about the first rotation axis 501. The first detent member 310 may be rotated about a central axis 701 of the first fixing pin 281. When the first detent member 310 is rotated, the first detent plate 311 may be moved to the first extension area 212 of the first rotary member. Accordingly, a spacing distance of the first extension area 212 of the first rotary member and the first detent plate 311 becomes closer from a first spacing distance L1 to a second spacing distance L2, and thus the first elastic member 380 fastened to the first fastening boss 217 and the second fastening boss 317 may be compressed toward the first extension area 212 of the first rotary member.

FIG. 8A is a view illustrating the fixing bracket according to an embodiment, and FIG. 8B is a view illustrating the first detent member according to an embodiment. Hereinafter, FIG. 8B illustrate the first detent member 310 as an example, and the second detent member (e.g., the second detent member 320 of FIG. 5) may be the same as or similar to the first detent member illustrated in FIG. 8B.

Referring to FIGS. 5 and 8A, the fixing bracket 230 include the first fixed rail 240 and the second fixed rail 250. The first fixed rail 240 may include the first rail inner-surface 241 and the first rail outer-surface 242, which face each other, that is, in opposite directions away from each other. The first fixed cam 810, in which ridges and valleys are repeated once or more, may be formed at a portion of the first rail outer-surface 242. The second fixed rail 250 may include the second rail inner-surface 251 and the second rail outer-surface 252, which face each other, that is, in opposite directions away from each other. The second rail inner-surface 251 may be formed to face the same direction as the first rail inner-surface 241. The second rail outer-surface 252 may be formed to face the same direction as the first rail outer-surface 242. The second fixed cam 820, in which ridges and valleys are repeated once or more, may be formed at a portion of the second rail outer-surface 252.

Referring to FIGS. 5 and 8B, the first detent member 310 may include the first movable rail 340 coupled to the first fixed rail 240. The first movable rail 340 may include the first inner peripheral surface 341 and the first outer peripheral surface 342, which face each other, that is, in opposite directions away from each other. The first movable cam 910, in which ridges and valleys are repeated once or more, may be formed at a portion of the first inner peripheral surface 341. The first movable cam 910 may be disposed to be engaged with the first fixed cam 810 when the first rotary member is rotated to form a first cam structure.

According to an embodiment, a second movable cam having a shape that is the same as or similar to that of the first movable cam 910 illustrated in FIG. 8B may be formed in the second detent member (e.g., the second detent member 320 of FIG. 5). The second movable cam may be formed by repeating ridges and valleys at a portion of the second inner peripheral surface (e.g., the second inner peripheral surface 351 of FIG. 5) of the second movable rail (e.g., the second movable rail 350 of FIG. 5) coupled to the second fixed rail (e.g., the second fixed rail 250 of FIG. 8) at least once. The second movable cam may be disposed to be engaged with the second fixed cam to form a second cam structure.

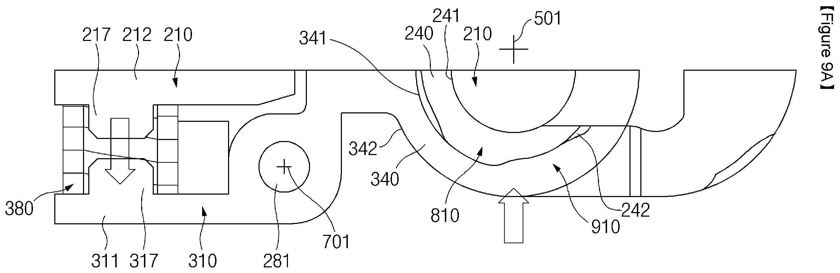

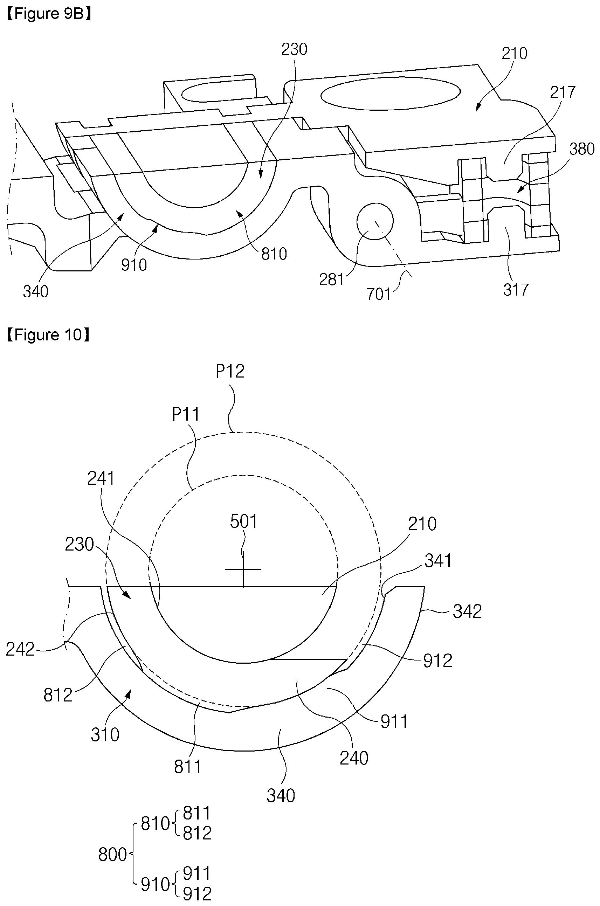

FIG. 9A is a cross-sectional view illustrating an example of the cam structure according to an embodiment. FIG. 9B is a perspective view illustrating an example of the cam structure according to an embodiment. FIG. 10 is a view illustrating a location of the cam structure according to an embodiment.

Prior to a description, the cam structure illustrated in FIGS. 9A, 9B, and 10 is the first cam structure including the first fixed cam illustrated in FIG. 8A and the first movable cam illustrated in FIG. 8B. The first cam structure may have a shape that is the same as or similar to that of the second cam structure. In the following description, the first cam structure will be described as an example.

Referring to FIGS. 9A, 9B, and 10, the hinge structure according to an embodiment includes the first rotary member 210, the fixing bracket 230, and the first detent member 310.

The first rotary member 210, as illustrated in FIG. 10, may be rotated along a first path P11, a center of which is a first imaginary rotation axis 501. The first path P11 may be a path, along which the first rotary member 210 that faces the first rail inner-surface 241 of the first fixed rail 240. For example, the path P11 may be in a shape of a circle around the first imaginary rotation axis 501 with a radius substantially corresponding to the first rail inner-surface 241.

The first detent member 310 may be moved along at least a portion of a second path P12 located on an outer side of the first path P11 when the first rotary member 210 is rotated. The second path P12 may be a path, along which the first inner peripheral surface 341 of the first detent member 310, which faces the second rail outer-surface 242 of the first fixed rail 240. For example, the path P12 may be in a shape of a circle around the first imaginary rotation axis 501 with a radius substantially corresponding to the second rail outer-surface 242.

The hinge structure according to an embodiment may include at least one first cam structure 800 disposed on an outer side of the fixing bracket 230. Each of the at least one first cam structure 800 may include the first fixed cam 810 and the first movable cam 910, which are engaged with each other.

The first fixed cam 810 may be formed on the first rail outer-surface 242 of the first fixed rail 240. The first fixed cam 810 may have a convexo-concave shape, in which at least one first ridge (or at least one first boss) 811 and at least one first valley 812 are repeated at at least a portion of the first rail outer-surface 242. The first ridge 811 may protrude from the first rail outer-surface 242 toward the first detent member 310 to contact the first detent member 310. The first valley 812 may be disposed to be spaced apart from the first inner peripheral surface 341 of the first detent member 310. The first fixed cam 810 may be disposed to be engaged with the first movable cam 910 formed in the first detent member 310 to provide a desired detent force.

The first movable cam 910 may be formed on the first inner peripheral surface 341 of the first detent member 310. The first movable cam 910 may have a convexo-concave shape, in which at least one second ridge (or at least one second boss) 911 and at least one second valley 912 are repeated at at least a portion of the first inner peripheral surface 341. The second ridge 911 may protrude from the first inner peripheral surface 341 toward the fixing bracket 230 to contact or to be contactable with the fixing bracket 230. When the first detent member 310 is rotated about a pivot axis that is the central axis 701 of the fixing pin 281, the first movable cam 910 may be moved linearly along the second path P12. As the first movable cam 910 is moved linearly, the first elastic member 380 may be compressed or prolonged.

According to an embodiment, the first fixed rail 240 of the fixing bracket 230 may be disposed to surround at least a portion of the first rotary member 210. The first movable rail 340 of the first detent member 310 may be disposed to surround at least a portion of the first fixed rail 240. The second fixed rail (e.g., the second fixed rail 250 of FIG. 5) of the fixing bracket 230 may be disposed to surround at least a portion of the second rotary member (e.g., the second rotary member 220 of FIG. 5). The second movable rail (e.g., the second movable rail 350 of FIG. 5) of the second detent member (e.g., the second detent member 320 of FIG. 5) may be disposed to surround at least a portion of the second fixed rail.

The first elastic member 380 may be disposed, in particular directly disposed, between the first rotary member 210 and the first detent member 310. For example, one end of the first elastic member 380 may be fastened to the first fastening boss 217 of the first rotary member 210, and an opposite end of the first elastic member 380 may be fastened to the second fastening boss 317 of the first detent member 310. Accordingly, a compression or prolonging of the first elastic member 380 may occur along a direction between the first fastening boss 217 and the second fastening boss 317. The first elastic member 380 may be compressed or prolonged when the first detent member 310 is rotated about the central axis 701 of the fixing pin 281.

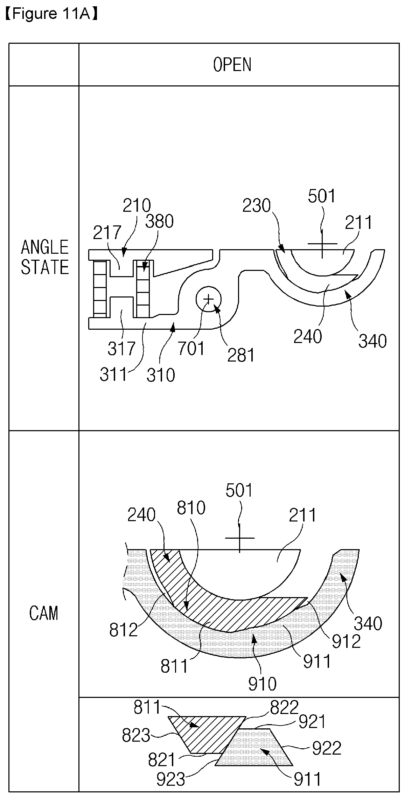

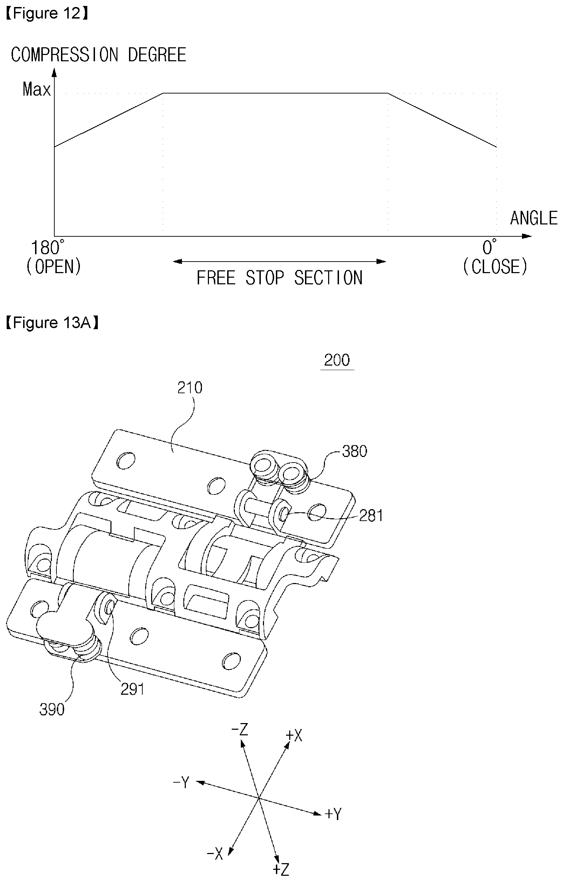

According to an embodiment, the first elastic member 380 may provide an elastic force in an opposite direction to a compression direction of the first elastic member 380 to the first cam structure 800 in a state, in which the first fixed cam 810 and the first movable cam 910 are engaged with each other. An elastic force of the first elastic member 380 may be converted to a rotational force that moves the first movable cam 910 in a free stop section. The second elastic member (e.g., the second elastic member 390 of FIG. 5) may provide an elastic force in an opposite direction to a compression direction of the second elastic member to the second cam structure in a state, in which the second fixed cam (e.g., the second fixed cam 820 of FIG. 8) and the second movable cam are engaged with each other. An elastic force of the second elastic member may be converted to a rotational force that moves the second movable cam in the free stop section. FIGS. 11A to 11C are views illustrating an operation of the cam structure according to an angle state of the hinge structure according to an embodiment. FIG. 12 is a view illustrating a compression degree of the elastic member according to an angle state of the hinge structure according to an embodiment.

Referring to FIGS. 11A to 11C, and FIG. 12, an angle state of the electronic device including the hinge structure, for example, may be a state of about 0 degrees to about 180 degrees. The angle state may be referred to an angle between the first rotary member 210 and the second rotary member 220. The about 0 degree state may correspond to the completely folded (closed) state of the foldable electronic device. The about 180 degree state may correspond to the flat (opened) state of the foldable electronic device. The state of between about 0 degrees and about 180 degrees may correspond to the free stop state that is an arbitrary state of the foldable electronic device between the flat state and the fully folded state. In the free stop state, the foldable electronic device and the hinge structure may be stably maintained in the arbitrarily folded state. A force required to fold or unfold the electronic device in the free stop state may be higher than a restoring force of the display. Accordingly, an operation of folding or unfolding the electronic device by a restoring force of the display in spite that a user does not intend the folding or unfolding in the free stop state may be prevented. For example, the free stop state may include a state, in which the elastic member is maximally compressed and a frictional force between the fixed cam 810 and the movable cams 910 increases. In the free stop state, a free stop force may be generated by a frictional force between the first fixed cam 810 and the first movable cam 910. Because the free stop force increases in proportion to the frictional force, the hinge structure may be stably maintained in the arbitrarily folded state as long as a force that is higher than the free stop force is not applied to the hinge structure. Accordingly, the hinge structure and the electronic device may be stably maintained in the folded state of various angles in the free stop section. For example, the fixed cam 810 and the movable cams 910 may be configured such that the free stop section extents between angles of 30° and 150°, in particular between 45° and 135°, particularly preferred between 60° and 120°.

According to an embodiment, the first fixed cam 810 may be disposed to be engaged with the first movable cam 910. Each of the first fixed cams 810 may include the first ridge (or the first boss) 811 and the first valley 812. The first ridge 811 may include a first protruding surface 821, a first inclined surface 822, and a second inclined surface 823. The first protruding surface 821 may protrude toward the first movable rail 340 of the first detent member 310, and at least a portion, in particular at least 50 percent, particularly preferred at least 75 percent, of the first protruding surface 821 may be formed to be flat. The first inclined surface 822 may have an inclination that is the same as or similar to that of the second inclined surface 823. The inclination between the first inclined surface 822 and the second inclined surface 823 may differ up to 30°, in particular up to 15°, particularly preferred up to 5°. The first inclined surface 822 may be formed to face a movement direction of the first movable cam 310 when the hinge structure is moved from the fully folded state to the flat state. The second inclined surface 823 may be disposed to face an opposite direction to the first inclined surface 822. The second inclined surface 823 may be formed to face a movement direction of the first movable cam 910 when the hinge structure is moved from the flat state to the fully folded state.

According to an embodiment, when the hinge structure is moved from the flat state to the fully folded state, the first movable cam 910 may be rotated in any one of the counterclockwise direction and the clockwise direction in a state, in which the first fixed cam 810 is fixed. When the hinge structure is moved from the flat state to the fully folded state, the second movable cam may be rotated in an opposite direction to that of the first movable cam 910 in a state, in which the second fixed cam (e.g., the second fixed cam 820 of FIG. 8A) is fixed.

According to an embodiment, when the hinge structure is moved from the fully folded state to the flat state, the first movable cam 910 may be rotated in the remaining one of the counterclockwise direction and the clockwise direction in a state, in which the first fixed cam 810 is fixed. When the hinge structure is moved from the fully folded state to the flat state, the second movable cam may be rotated in an opposite direction to that of the first movable cam 910 in a state, in which the second fixed cam is fixed.

According to an embodiment, the first movable cam 910 may include the second ridge (or the second boss) 911 and the second valley 912. The second ridge 911 may include a second protruding surface 921, a third inclined surface 922, and a fourth inclined surface 923. The second protruding surface 921 may protrude toward an opposite direction to the first protruding surface 821. The second protruding surface 921 may protrude toward the first fixed rail 240 of the fixing bracket 230. At least a portion, in particular at least 50 percent, particularly preferred at least 75 percent, of the second protruding surface 921 may be formed flat. The fourth inclined surface 923 may be formed to face a movement direction of the first movable cam 910 when the hinge structure is moved from the flat state to the fully folded state. The third inclined surface 922 may be disposed to face an opposite direction to the fourth inclined surface 923. The third inclined surface 922 may be formed to face a movement direction of the first movable cam 310 when the hinge structure is moved from the fully folded state to the flat state.

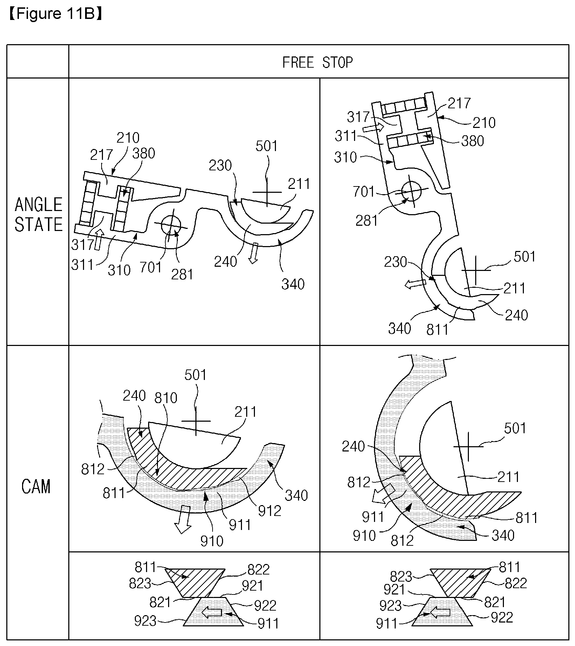

As illustrated in FIG. 11A, when the hinge structure is in the flat state, the first inclined surface 822 of the fixed cam 810 may contact the fourth inclined surface 923 of the movable cam 910. Because the first inclined surface 822 and the fourth inclined surface 923 are engaged with each other, the fixed cam 810 may restrict movement of the movable cam 910 when the hinge structure is in the flat state. The movable cam 910 may not be moved in the counterclockwise direction along the second path (e.g., the second path P12 of FIG. 10). Then, the first detent plate 311 of the first detent member 310 may be spaced apart from the first rotary member 210 by a first interval (e.g., the first interval L1 of FIG. 7A). The elastic member 380 may be in a compression state, in which a specific elastic force may be applied to the first rotary member 210. For example, the first elastic member 380 may be in a prolonged state as compared with the free stop state illustrated in FIG. 11B. Accordingly, the hinge structure may provide a detent function for maintaining the flat state while not moving to the free stop state. The hinge structure may provide a detent function of enduring a repulsive force (or a force of folding the display in the flat state) of the display.

As illustrated in FIG. 11B, when the hinge structure is moved from the flat state to the free stop state, the first detent member 310 may be moved toward the first protruding surface 821 of the first ridge 811 along the first inclined surface 822 of the first ridge 811 due to rotation of the first rotary member 210. At least a portion of the first protruding surface 821 of the first fixing bracket 230 and at least a portion of the second protruding surface 921 of the first detent member 310 may be in a surface-contact state. Then, because the first detent member 310 is moved while the first fixing pin 281 is taken as a rotation axis, the first detent plate 311 of the first detent member 310 may compress the first elastic member 380 toward the first rotary member 210. For example, the first elastic member 380 may be a state, in which it is compressed more than in the fully folded state or the flat state. In the free stop state, the first elastic member 380, as illustrated in FIG. 12, may be maximally compressed as compared with the case of the fully folded state or the flat state. The compressed first elastic member 380, more accurately the elastic force exerted thereof, may increase a frictional force between the first fixed cam 810 and the first movable cam 910, and the increased frictional force may provide a torque that may maintain the hinge structure in a specific state.

According to an embodiment, the hinge structure may require a relatively strong force such that the first elastic member 380 is compressed to move the electronic device from the fully folded state or the flat state to the free stop state. Accordingly, when a force relatively higher than a force the hinge structure in the fully folded state and/or the flat state is applied to, the hinge structure may be moved from the fully folded state and/or the flat state to the free stop state.

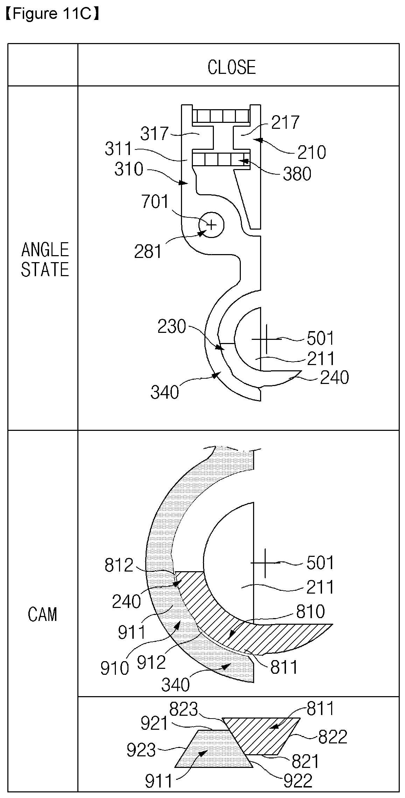

As illustrated in FIG. 11C, when the hinge structure is in the fully folded state (or in a state, in which the electronic device is folded at about 0 degrees), the first movable cam 910 may be moved toward the first valley 812 of the fixed cam along the first protruding surface 821 and the second inclined surface 823. The second inclined surface 823 of the first ridge 811 may contact the third inclined surface 922 of the second ridge 911. Because the second inclined surface 823 and the third inclined surface 922 are engaged with each other, the hinge structure may provide a detent function of maintaining the fully folded state while not being moved (or deformed) to the free stop state. Then, because the first elastic member 380 is prolonged as compared with the free stop state illustrated in FIG. 11B, it may have a larger length than in the free stop state.

According to an embodiment, an elastic force applied to the first detent plate 311 by the first elastic member 380 may be related to a frictional force between the fixed cam 910 and the movable cam 810. For example, as the elastic force becomes higher, the frictional force between the fixed cam 910 and the movable cam 819 may increase. Accordingly, as the first elastic member 380 is compressed, the frictional force between the fixed cam 910 and the movable cam 810 may increase. For example, in the free stop state, the frictional force between the fixed cam 910 and the movable cam 810 may be higher than in the fully folded state or the flat state. For example, the frictional force increased in the free state may offset the repulsive force of the display (e.g., the display 140 of FIG. 1), the folding area 143 of which is a curved surface. Accordingly, the electronic device 100 may stably maintain the fully folded state and/or the flat state.

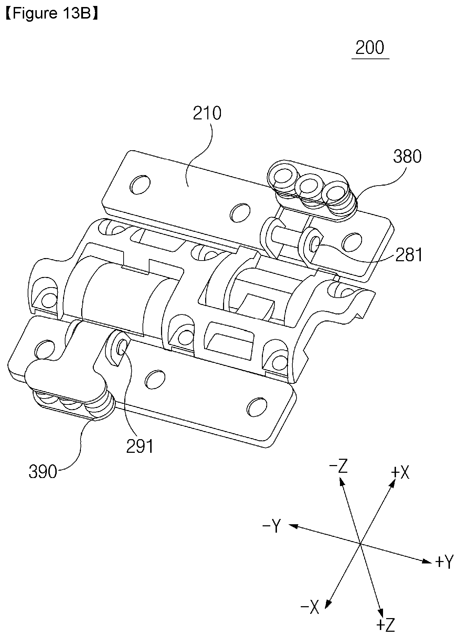

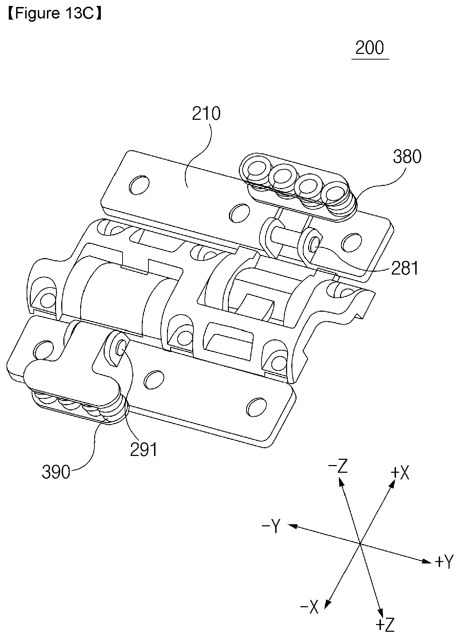

FIGS. 13A, 13B, and 13C are views illustrating various examples of the elastic members of the hinge structure according to an embodiment.

Referring to FIGS. 13A to 13C, the hinge structure 200 according to an embodiment may include a plurality of first elastic members 380 and a plurality of second elastic members 390.

The plurality of first elastic members 380 and the plurality of second elastic members 390 may be disposed in a row. The plurality of first elastic members 380 may be disposed in a row in a direction that is parallel to a rotation axis (or a folding axis of the display) of the first fixing pin 281. The plurality of second elastic members 390 may be disposed in a row in a direction that is parallel to a rotation axis (or a folding axis of the display) of the second fixing pin 291.

The number of the plurality of first elastic members 380 and the plurality of second elastic members 390 may be proportional to the detent force. As the numbers of the plurality of first elastic members 380 and the plurality of second elastic members 390 increase, a force transmitted to the detent members 310 and 320 also increases whereby the detent force corresponding to a restoring force of the display also may increase. In this way, due to the increase in the numbers of the plurality of first elastic members 380 and the plurality of second elastic members 390, the detent force for offsetting the restoring force of the display may be easily secured.

The number of the plurality of first elastic members 380 may be the same as the plurality of second elastic members 390. Two, three, or four first elastic members 380 may be formed, and two, three, or four second elastic members 390, which is the same as the number of the first elastic member 380, may be formed. However, the plurality of first and/or second elastic members 380, 390 is not limited thereto and may be even more than four first and/or second elastic members 380, 390.

For example, as compared with the case in which two springs are disposed in a row in the first elastic members 380 and the second elastic members 390, a force transmitted to the detent members 310 and 320 is increased when three or four springs are provided whereby the detent force may be increased. As another example, as compared with the case in which three or four springs are disposed in a row in the first elastic members 380 and the second elastic members 390, material costs and the weight of the hinge structure may be reduced when two springs are provided.

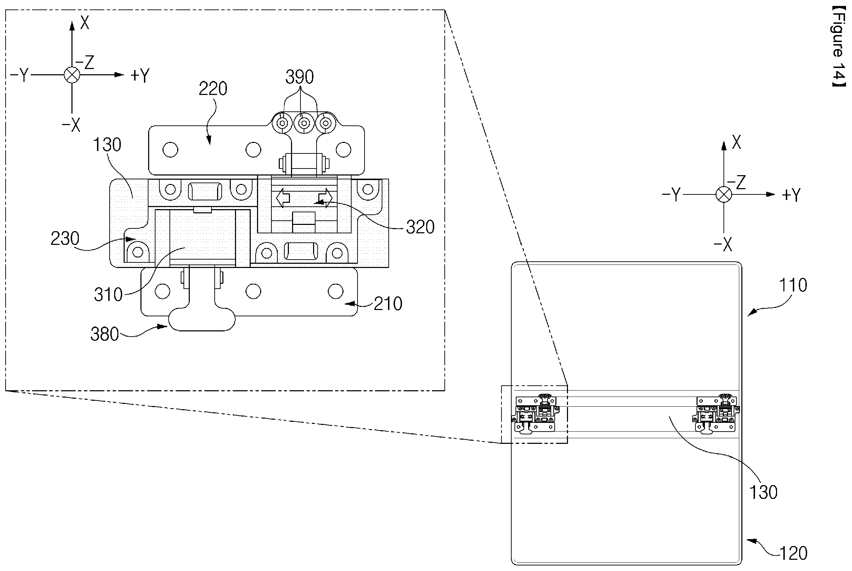

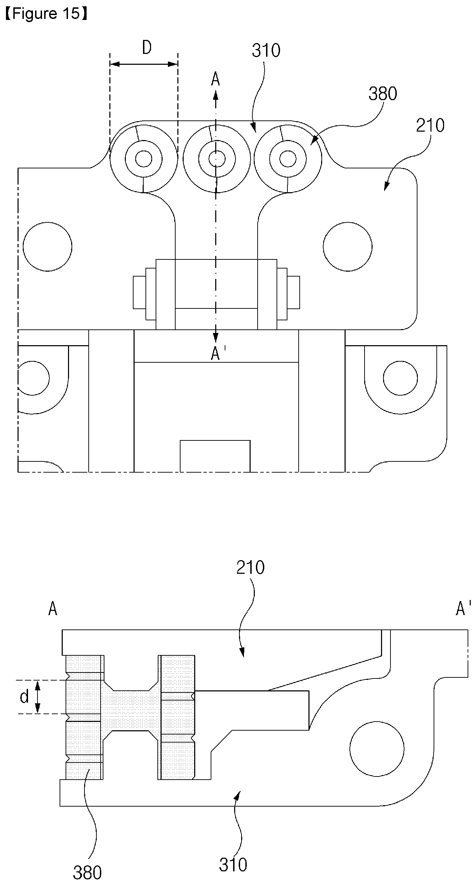

FIG. 14 is a view illustrating the hinge structure and the hinge housing according to an embodiment. FIG. 15 is a view illustrating a spring force (or an elastic force) according to a diameter and a wire diameter of the elastic member of the hinge structure according to an embodiment.

Referring to FIGS. 14 and 15, the electronic device according to an embodiment may include the hinge housing 130 disposed between the first housing 110 and the second housing 120. The hinge housing 130 may overlap at least a portion of the fixing bracket 230, and may not overlap at least any one of the elastic members 380 and 390 disposed between the rotary members 210 and 220 and the detent members 310 and 320. At least any one of diameters "D" and wire diameters of the elastic members 380 and 390 disposed on an outside of the hinge housing 130 may not be restricted by a thickness of the set but may be increased. A spring force may be increased by increasing at least any one of the diameters "D' and the wire diameters "T" of the elastic members 380 and 390. Through at least one of the diameters "D" and the wire diameters "d" of the elastic members 380 and 390, the detent force may be increased.

As an example, the wire diameters of the plurality of springs included in the elastic members 380 and 390 may be increased. The pressures of the plurality of springs included in the elastic members 380 and 390, as in Equation 1, may be proportional to the power of four of the wire diameters of the springs, and may be inversely proportional to the power of three of the diameters of the springs. When the wire diameters of the plurality of springs included in the elastic members 380 and 390 are increased, the pressures of the springs that are proportional to the wire diameters of the springs are increase whereby a desired detent force may be obtained. $k ∝ {d}^{4} / {D}^{3}$

As another example, the diameters of the plurality of springs included in the elastic members 380 and 390 may be increased. As in Equation 1, because a spring index "I" that is proportional to an average diameter Da of the plurality of springs is increased, it may be easy to manufacture the springs and a manufacturing yield rate of the springs may be increased. $I = Da / d$

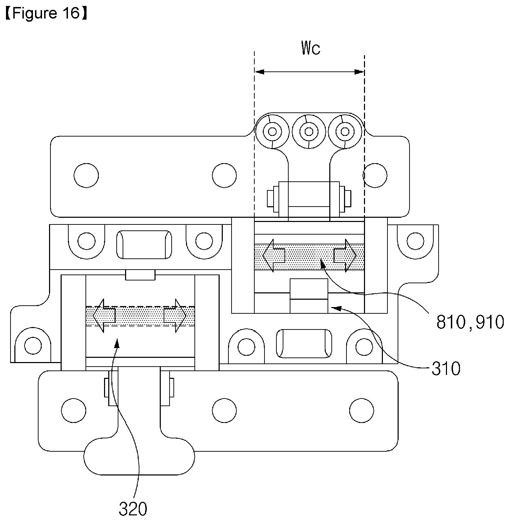

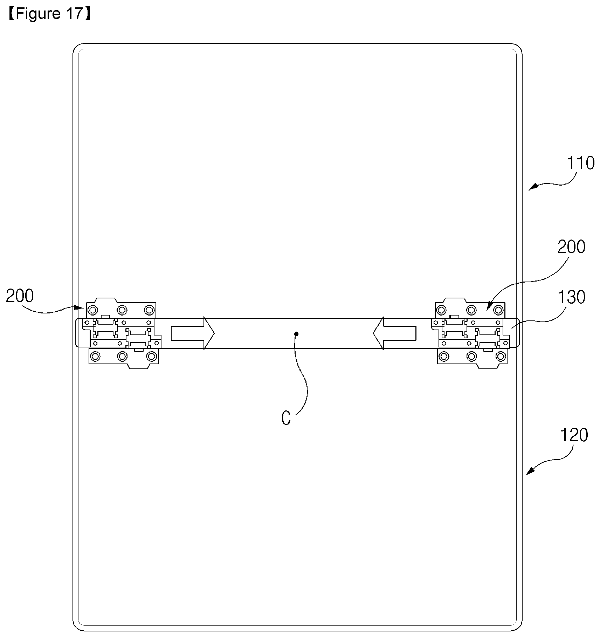

FIG. 16 is a plan view illustrating the hinge structure according to an embodiment. FIG. 17 is a view for explaining extension directions of the detent members according to an embodiment.

Referring to FIGS. 16 and 17, the hinge structure (e.g., the hinge structure 200 of FIG. 1) according to an embodiment may include the detent members 310 and 320. Each of the detent members 310 and 320 may include a movable cam. For example, the first movable cam 910 included in the first detent member 310 may be disposed to be engaged with the fixed cam 810 formed in the fixing bracket. The detent force may be increased in proportion to friction areas of the first movable cam 910 and the first fixed cam 810. The friction area may be increased when an overlapping area of the first movable cam 910 and the first fixed cam 810 becomes larger. Because the frictional force is increased due to an increase in the friction area, the detent force may be increased. The detent force of the second movable cam included in the second detent member 320 also may be increased when an overlapping area with the second fixed cam becomes larger.

The detent members 310 and 320 may extend in a direction that is parallel to the axial directions of the fixing pins. As an example, when the detent members 310 and 320 extend toward the center "C" of the hinge housing 130, lengths Wc of the movable cams 910 may be increased. A length of the fixed cam 810 engaged with the movable cam 910, the length of which is increased, may also be also increased, and thus the detent force may be increased.

According to an embodiment, the detent members 310 and 320 may extend while preventing interferences with electronic parts disposed to be adjacent to the hinge structure.

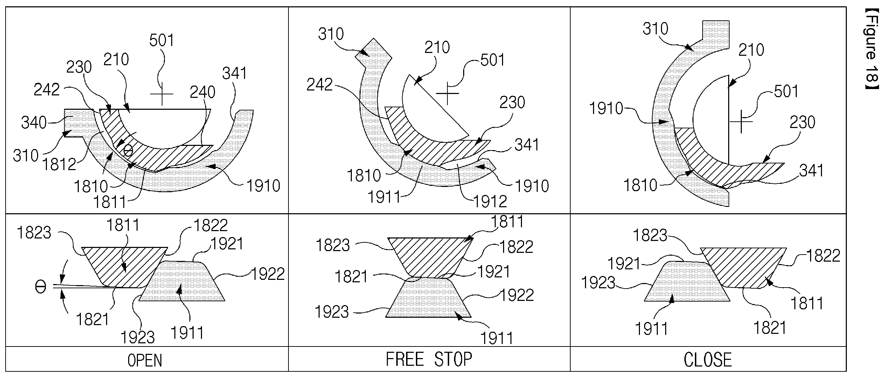

FIG. 18 illustrates views of an example of the fixed cam and the movable cam of the hinge structure according to an embodiment.

Referring to FIG. 18, the hinge structure (e.g., the hinge structure 200 of FIG. 1) according to an embodiment may include the first rotary member 210 that is rotated about the first rotation axis 501, the fixing bracket 230 including the first fixed rail 240, and the first detent member 310 including the first movable rail 340.

At least one fixed cam 1810 may be formed on the first rail outer-surface 242 of the first fixed rail 240. In the fixed cam 1810, at least one first ridge (or at least one boss) 1811 and at least one first valley 1812 may be repeatedly formed. The first ridge 1811 may include a first protruding surface 1821, a first inclined surface 1822, and a second inclined surface 1823.

The first protruding surface 1821 may protrude toward the first movable rail 340 of the first detent member 310, and at least a portion, in particular at least 50 percent, particularly preferred at least 75 percent, of the first protruding surface 1821 may be formed to be flat. The first protruding surface 1821 may be formed to be inclined downwards toward the second inclined surface 1823 from the first inclined surface 1822 to form a specific angle "θ". The first inclined surface 1822 may have an inclination that is the same as or similar to that of the second inclined surface 1823. The inclination between the first inclined surface 1822 and the second inclined surface 1823 may differ up to 30°, in particular up to 15°, particularly preferred up to 5°. The first inclined surface 1822 may be formed to face a movement direction of the first movable cam 910 when the hinge structure is moved from the flat state to the fully folded state. The second inclined surface 1823 may be disposed to face an opposite direction to the first inclined surface 1822. The second inclined surface 1823 may be formed to face a movement direction of the first movable cam 910 when the hinge structure is moved from the fully folded state to the flat state.

According to an embodiment, a first movable cam 1910 may include the second ridge (or the second boss) 1911 and a second valley 1912. The second ridge 1911 may include a second protruding surface 1921, a third inclined surface 1922, and a fourth inclined surface 1923. The second protruding surface 1921 may protrude toward an opposite direction to the first protruding surface 1821. The second protruding surface 1921 may protrude toward the first fixed rail 240 of the fixing bracket 230. At least a portion, in particular at least 50 percent, particularly preferred at least 75 percent, of the second protruding surface 1921 may be formed flat. The second protruding surface 1921 may be formed to be inclined upwards toward the fourth inclined surface 1923 from the third inclined surface 1922 to form a specific angle "θ". An inclination angle of the second protruding surface 1921 may be the same as or similar to an inclination angle of the first protruding surface 1821. The inclination angle between the first protruding surface 1821 and the second protruding surface 1921 may differ up to 15°, in particular up to 10°, particularly preferred up to 5°. The fourth inclined surface 1923 may be formed to face a movement direction of the first movable cam 1910 when the hinge structure is moved from the fully folded state to the flat state. The third inclined surface 1922 may be disposed to face an opposite direction to the fourth inclined surface 1923. The third inclined surface 1922 may be formed to face a movement direction of the first movable cam 1910 when the hinge structure is moved from the flat state to the fully folded state.

According to an embodiment, when the hinge structure is in the flat state, the first ridge 1811 of the first fixed cam 1810 may be disposed to be engaged with the second valley 1912 of the first movable cam 1910, and the first valley 1812 of the first fixed cam 1810 may be disposed to be engaged with the second ridge 1911 of the first movable cam 1910. At least a portion of the first inclined surface 1822 of the first fixed cam 1810 may contact at least a portion of the fourth inclined surface 1923 of the first movable cam 1910. Because the first inclined surface 1822 and the fourth inclined surface 1923 are engaged with each other, the first fixed cam 1810 may restrict movement of the first movable cam 1910 when the hinge structure is in the flat state. The first movable cam 1910 may not be moved in the counterclockwise direction along the second path (e.g., the second path P12 of FIG. 10).

According to an embodiment, when the hinge structure is in the free stop state, the first ridge 1811 of the fixed cam 1810 may be disposed to face the second ridge 1911 of the first movable cam 1910, and the first valley 1812 of the fixed cam 1810 may be disposed to face the second valley 1912 of the first movable cam 1910. At least a portion of the first protruding surface 1821 of the first fixing bracket 230 and at least a portion of the second protruding surface 1921 of the first detent member 310 may surface-contact each other. A portion of at least any one of the first protruding surface 1821 and the second protruding surface 1921 may be formed to be inclined. Accordingly, due to an inclination angle of at least any one of the first protruding surface 1821 and the second protruding surface 1921, the hinge structure may endure a repulsive force (or a force of intending to folding or unfolding the display in the flat state) of the display.

According to an embodiment, when the hinge structure is in the fully folded state (or a state, in which the hinge structure is folded at about 0 degrees), the first movable cam 1910 may be moved toward the first valley 1812 of the fixed cam 1810 along the first protruding surface 1821 and the second inclined surface 1823. The first ridge 1811 of the first fixed cam 1810 may be disposed to be engaged with the second valley 1912 of the first movable cam 1910, and the first valley 1812 of the first fixed cam 1810 may be disposed to be engaged with the second ridge 1911 of the first movable cam 1910. At least a portion of the second inclined surface 1823 may contact at least a portion of the third inclined surface 1922. Because the second inclined surface 1823 and the third inclined surface 1922 are engaged with each other, the hinge structure may provide a detent function of maintaining the fully folded state while not being moved to the free stop state.

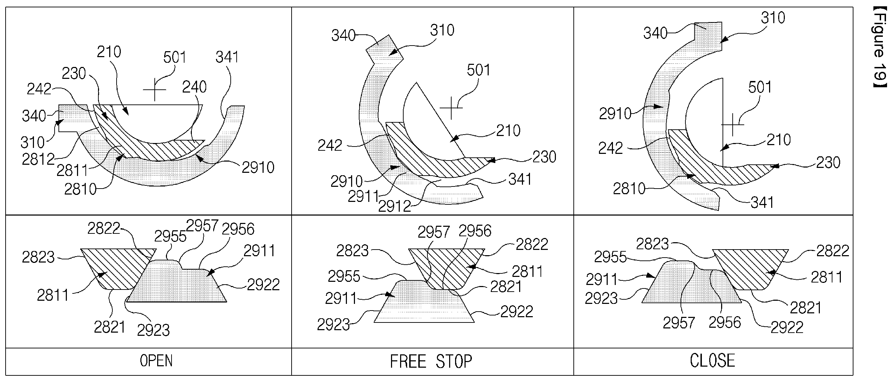

FIG. 19 illustrates views of another example of the fixed cam and the movable cam of the hinge structure according an embodiment.

Referring to FIG. 19, at least one fixed cam 2810 may be formed on the first rail outer-surface 242 of the first fixed rail 240. In the first fixed cam 2810, at least one first ridge (or at least one boss) 2811 and at least one first valley 2812 may be repeatedly formed. The first ridge 2811 may include a first protruding surface 2821, a first inclined surface 2822, and a second inclined surface 2823. The first protruding surface 2821 may protrude toward the first movable rail 340 of the first detent member 310, and at least a portion, in particular at least 50 percent, particularly preferred at least 75 percent, of the first protruding surface 2821 may be formed to be flat.

According to an embodiment, a first movable cam 2910 may include a second ridge (or the second boss) 2911 and a second valley 2912. The second ridge 2911 may include a first sub protruding surface 2955, a second sub protruding surface 2956, a first sub inclined surface 2957, a third inclined surface 2922, and a fourth inclined surface 2923. The first sub protruding surface 2955 and the second sub protruding surface 2956 may protrude toward an opposite direction to the first protruding surface 2821. The first sub protruding surface 2955 and the second sub protruding surface 2956 may protrude toward the first fixed rail 240 of the fixing bracket 230. The first sub protruding surface 2955 may protrude further than the second sub protruding surface 2956. A portion, in particular at least 50 percent, particularly preferred at least 75 percent, of at least any one of the first sub protruding surface 2955 and the second sub protruding surface 2956 may be formed to be flat. The first sub inclined surface 2957 may be disposed between the first sub protruding surface 2955 and the second sub protruding surface 2956. The fourth inclined surface 2923 may be formed to face a movement direction of the first movable cam 2910 when the hinge structure is moved from the flat state to the fully folded state. The third inclined surface 2922 may be disposed to face an opposite direction to the fourth inclined surface 2923. The third inclined surface 2922 may be formed to face a movement direction of the first movable cam 2910 when the hinge structure is moved from the fully folded state to the flat state.

According to an embodiment, when the hinge structure is in the flat state, at least a portion of the first inclined surface 2822 of the first fixed cam 2810 may contact at least a portion of the fourth inclined surface 2923 of the first movable cam 2910. Because the first inclined surface 2822 and the fourth inclined surface 2923 are engaged with each other, the first fixed cam 2810 may restrict movement of the first movable cam 2910 when the hinge structure is in the flat state. The first movable cam 2910 may not be moved in the counterclockwise direction along the second path (e.g., the second path P12 of FIG. 10).

According to an embodiment, when the hinge structure is in the free stop state, the first movable cam 2910 may be moved along the first protruding surface 2821. At least a portion of the first protruding surface 2821 of the first fixing bracket 230 and at least a portion of the second protruding surface 2921 of the first detent member 310 may surface-contact each other. When the hinge structure is moved from the flat state or the fully folded state to the free stop state, the first movable cam 2910 may be moved rapidly along the first protruding surface 2821 whereby the first protruding surface 2821 may be seated on the second sub protruding surface 2956 of the first movable cam 2910. In this way, because the hinge structure provides vibrations due to seating to a user, the user may be differently provided with a stop feeling or a hinge operation feeling in the free stop state. Accordingly, the hinge structure may provide various folding experiences to the user.

According to an embodiment, when the hinge structure is in the fully folded state (or a state, in which the hinge structure is folded at about 0 degrees), the first movable cam 2910 may be moved toward the first valley 2812 of the fixed cam 2810 along the first protruding surface 2821 and the second inclined surface 2823. At least a portion of the second inclined surface 2823 may contact at least a portion of the third inclined surface 2922. Because the second inclined surface 2823 and the third inclined surface 2922 are engaged with each other, the hinge structure may provide a detent function of maintaining the fully folded state while not being moved to the free stop state.

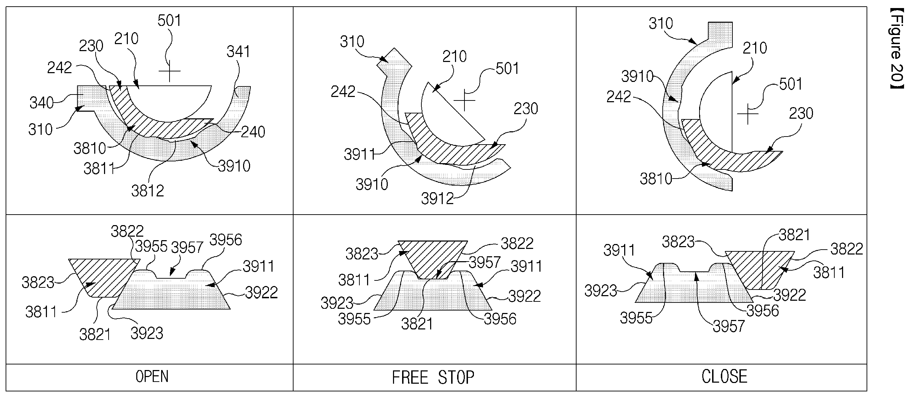

FIG. 20 illustrates views of another example of the fixed cam and the movable cam of the hinge structure according to an embodiment.

Referring to FIG. 20, at least one fixed cam 3810 may be formed on the first rail outer-surface 242 of the first fixed rail 240. In the first fixed cam 3810, at least one first ridge (or at least one boss) 3811 and at least one first valley 3812 may be repeatedly formed. The first ridge 3811 may include a first protruding surface 3821, a first inclined surface 3822, and a second inclined surface 3823. The first protruding surface 3821 may protrude toward the first movable rail 340 of the first detent member 310, and at least a portion, in particular at least 50 percent, particularly preferred at least 75 percent, of the first protruding surface 3821 may be formed to be flat.

According to an embodiment, a first movable cam 3910 may include the second ridge (or the second boss) 3911 and the second valley 3912. The second ridge 3911 may include a first sub protruding surface 3955, a second sub protruding surface 3956, a cam recess 3957, a third inclined surface 3922, and a fourth inclined surface 3923. The first sub protruding surface 3955 and the second sub protruding surface 3956 may protrude toward an opposite direction to the first protruding surface 3821. The first sub protruding surface 3955 and the second sub protruding surface 3956 may protrude toward the first fixed rail 240 of the fixing bracket 230. The first sub protruding surface 3955 may protrude to a height that is the same as or similar to that of the second sub protruding surface 3956. A portion of at least any one of the first sub protruding surface 3955 and the second sub protruding surface 3956 may be formed to be flat. The first cam recess 3957 may be disposed between the first sub protruding surface 3955 and the second sub protruding surface 3956. The fourth inclined surface 3923 may be formed to face a movement direction of the first movable cam 3910 when the hinge structure is moved from the flat state to the fully folded state. The third inclined surface 3922 may be disposed to face an opposite direction to the fourth inclined surface 3923. The third inclined surface 3922 may be formed to face a movement direction of the first movable cam 3910 when the hinge structure is moved from the fully folded state to the flat state.

According to an embodiment, when the hinge structure is in the flat state, at least a portion of the first inclined surface 3822 of the first fixed cam 3810 may contact at least a portion of the fourth inclined surface 3923 of the first movable cam 3910. Because the first inclined surface 3822 and the fourth inclined surface 3923 are engaged with each other, the first fixed cam 3810 may restrict movement of the first movable cam 3910 when the hinge structure is in the flat state. The first movable cam 3910 may not be moved in the counterclockwise direction along the second path (e.g., the second path P12 of FIG. 10). The hinge structure may be maintained in the flat state while not being moved to the free stop state.

According to an embodiment, when the hinge structure is in the free stop state, the first movable cam 3910 may be moved along the first protruding surface 3821. At least a portion of the first protruding surface 3821 of the first fixing bracket 230 may surface-contact at least a portion of a surface defined by the cam recess 3957. When the housing structure is moved from the flat state or the fully folded state to the free stop state, the first movable cam 3910 may be rapidly moved along the first protruding surface 3821 whereby the first protruding surface 3821 may be seated in the cam recess 3957. In this way, because the hinge structure provides vibrations due to seating to a user, the user may be differently provided with a stop feeling or a hinge operation feeling in the free stop state. Accordingly, the hinge structure may provide various folding experiences to the user.

According to an embodiment, when the hinge structure is in the fully folded state (or a state, in which the hinge structure is folded at about 0 degrees), the first movable cam 3910 may be moved toward the first valley 3812 of the fixed cam 3810 along the first protruding surface 3821 and the second inclined surface 3823. At least a portion of the second inclined surface 3823 may contact at least a portion of the third inclined surface 3922. Because the second inclined surface 3823 and the third inclined surface 3922 are engaged with each other, the hinge structure may provide a detent function of maintaining the fully folded state while not being moved to the free stop state.

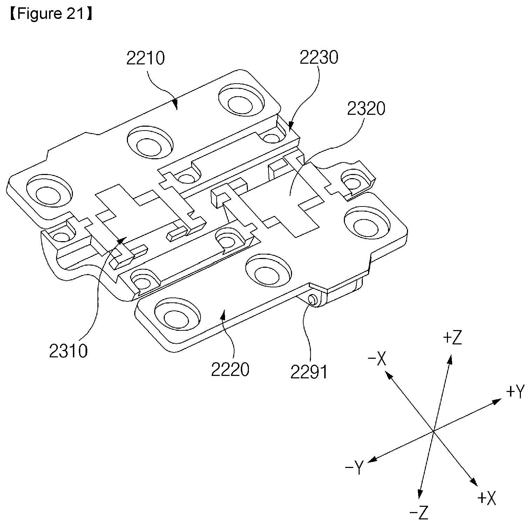

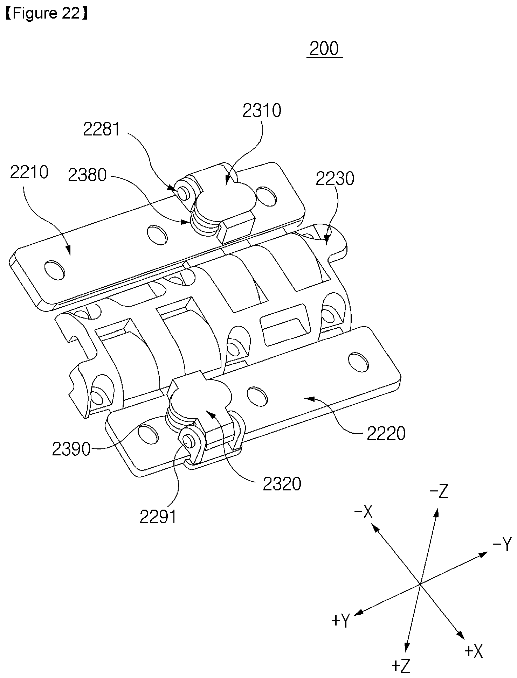

FIG. 21 is a front perspective view illustrating another example of the hinge structure according to an embodiment. FIG. 22 is a rear perspective view illustrating another example of the hinge structure according to an embodiment.

Referring to FIGS. 21 and 22, the hinge structure according to an embodiment may include rotary members 2210 and 2220, a fixing bracket 2230, and detent members 2310 and 2320.

The rotary members 2210 and 2220 may include the first rotary member 2210 and the second rotary member 2220. A description of the first rotary member 2210 and the second rotary member 2220 may be replaced by the description of the first rotary member and the second rotary member illustrated in FIG. 6. A description of the fixing bracket 2230 may be replaced by the description of the fixing bracket 230 illustrated in FIG. 6. The detent members 2310 and 2320 may include the first detent member 2310 and the second detent member 2320. At least a portion of a description of the first detent member 2310 and the second detent member 2320 may be replaced by the description of the first detent member and the second detent member illustrated in FIG. 6. The first detent member 2310 may be coupled to the first rotary member 2210 through a first fixing pin 2281. The first fixing pin 2281 may be disposed on an outer side (-X axis direction) of the first rotary member 2210. The second detent member 2320 may be coupled to the second rotary member 2220 through a second fixing pin 2291. The second fixing pin 2291 may be disposed on an outer side (-X axis direction) of the second rotary member 2220.

The first elastic member 2380 may be disposed between the first detent member 2310 and the first rotary member 2210. The second elastic member 2390 may be disposed between the second detent member and the second rotary member 2220. A description of the first elastic member 2380 and the second elastic member 2390 may be replaced by the description of the first elastic member 380 and the second elastic member 390 illustrated in FIG. 6.

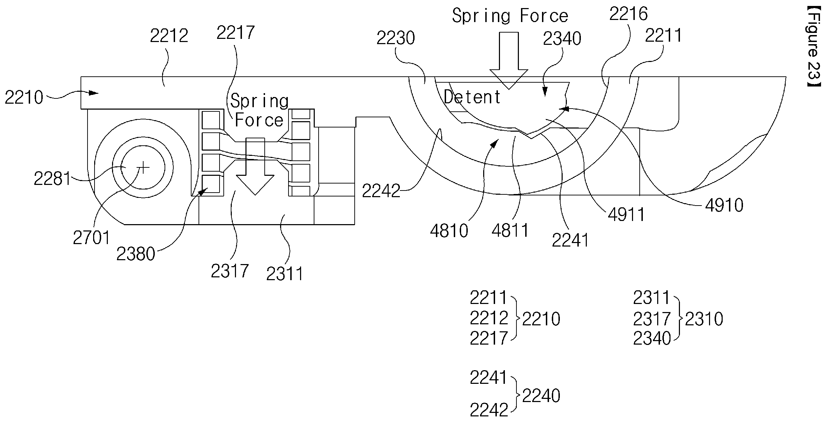

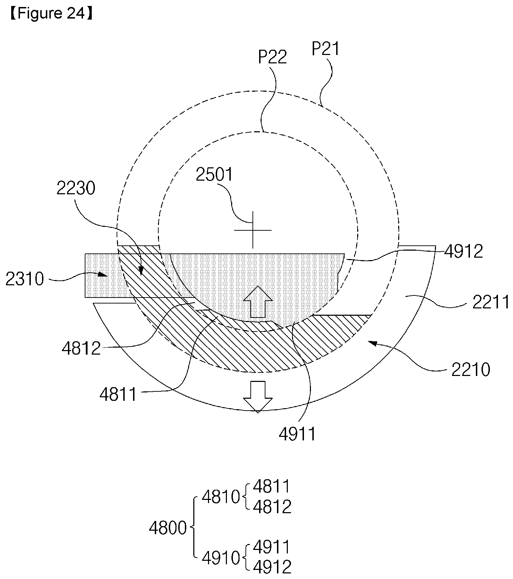

FIG. 23 is a cross-sectional view illustrating another example of the hinge structure according to an embodiment. FIG. 24 is a view illustrating the cam member illustrated in FIG. 23.

Referring to FIGS. 23 and 24, the hinge structure according to an embodiment may include the first rotary member 2210, the fixing bracket 2230, and the first detent member 2310.

The first rotary member 2210 may include a first coupling area 2211, a first extension area 2212, and a first fastening boss 2217.

The first detent member 2310 may include a first detent plate 2311, a first movable rail 2340, and a second fastening boss 2317. The first movable rail 2340 may be disposed on an inside of the first rotary member 2210. A first movable cam 4910 may be formed on a first outer peripheral surface 2342 of the first movable rail 2340. The first movable cam 4910 may be engaged with a first fixed cam 4810, and may be rotated along a first rail inner-surface 2241 of a first fixed rail 2240.

The fixing bracket 2230 may include the first fixed rail 2240 disposed between the first movable rail 2340 and the first coupling area 2211 of the first rotary member 2210. The first fixed rail 2240 may include the first rail inner-surface 2241 and a first rail outer-surface 2242. Each of the first rail inner-surface 2241 and the first rail outer-surface 2242 may have a curved shape. The first fixed cam 4810 may be formed on the first rail inner-surface 2241.

According to an embodiment, the first fixed rail 2240 of the fixing bracket 2230 may be disposed to surround at least a portion of the first movable rail 2340 of the first detent member 2310. The first coupling area 2211 of the first rotary member 2210 may be disposed to surround at least a portion of the first fixed rail 2240.

According to an embodiment, a second fixed rail having a shape that is the same as or similar to that of the first fixed rail 2240 may be formed in the fixing bracket 2230. For example, the second fixed rail may be formed to be symmetrical to the first fixed rail 2141 with respect to the +Y axis and the -Y axis. A second movable rail having a shape that is the same as or similar to that of the first movable rail 2340 may be formed in the second detent member 2320. For example, the second movable rail may be formed to be symmetrical to the first movable rail 2340 with respect to the +Y axis and the -Y axis. A second coupling area having a shape that is the same as or similar to that of the first coupling area 2211 may be formed in the second rotary member 2220. For example, the second coupling area may be formed to be symmetrical to the first coupling area 2211 with respect to the +Y axis and the -Y axis. Accordingly, the second fixed rail of the fixing bracket 2230 may be disposed to surround at least a portion of the second movable rail of the second detent member 2320, and the second coupling area of the second rotary member 2220 may be disposed to surround at least a portion of the second fixed rail.

According to an embodiment, the first rotary member 2210, as illustrated in FIG. 24, may be rotated along a first path P21, a center of which is a first imaginary rotation axis 2501. The first path P21 may be a path, along which the first rotary member 210 that faces the first rail outer-surface 2242 of the fixed bracket 2230. For example, the first path P21 may be in a shape of a circle around the first imaginary rotation axis 2501 with a radius substantially corresponding to the first rail outer-surface 2242.

The first detent member 2310 may be moved along at least a portion of a second path P22 located on an inner side of the first path P21 when the first rotary member 2210 is rotated. The second path P22 may be a path, along which the first detent member 2310 that faces the first rail inner-surface 2241 of the fixing bracket 2230. For example, the second path P22 may be in a shape of a circle around the first imaginary rotation axis 2501 with a radius substantially corresponding to the first rail inner-surface 2241.

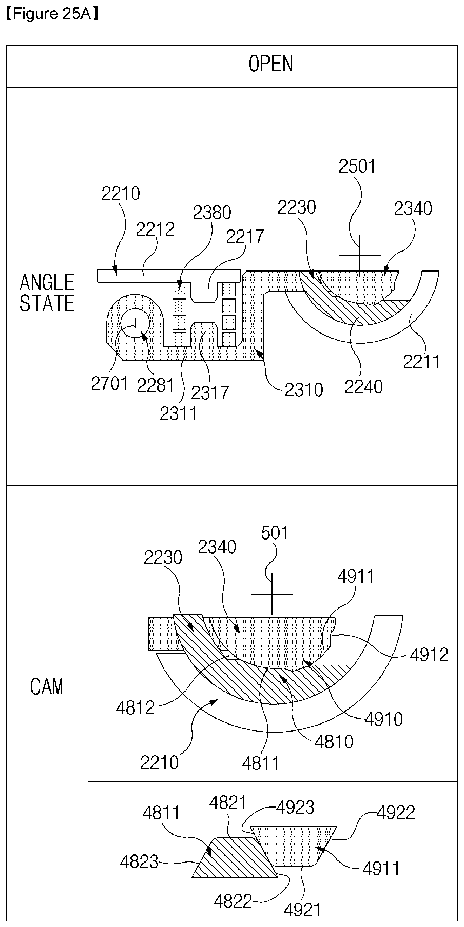

FIGS. 25A to 25C are views illustrating an operation of the cam structure according to a folding angle of the hinge structure according to an embodiment illustrated in FIGS. 23 and 24.

Referring to FIGS. 25A to 25C, an angle state of the electronic device including the hinge structure, for example, may be a state of about 0 degrees to about 180 degrees. The angle state may be referred to an angle between the first rotary member 210 and the second rotary member 220. The about 0 degree state may correspond to the fully folded state of the foldable electronic device. The about 180 degree state may correspond to the flat state of the foldable electronic device. The state of between about 0 degrees and about 180 degrees may correspond to the free stop state that is an arbitrary state of the foldable electronic device between the flat state and the fully folded state.

A cam structure including the at least one fixed cam 4810 and the at least one movable cam 4910 may be formed in the hinge structure according to an embodiment. The fixed cam 4810 may be disposed to be engaged with the movable cam 4910. The cam structure may be the first cam structure and/or the second cam structure, which has been above.

Each of the fixed cams 4810 may include a first ridge (or the first boss) 4811 and a first valley 4812. The first ridge 4811 may include a first protruding surface 4821, a first inclined surface 4822, and a second inclined surface 4823. The first protruding surface 4821 may protrude toward the first movable rail 2340 of the first detent member 2310 in the fixed rail 2240 of the fixing bracket 2230, and at least a portion, in particular at least 50 percent, particularly preferred at least 75 percent, of the first protruding surface 4821 may be formed to be flat. The first inclined surface 4822 may have an inclination that is the same as or similar to that of the second inclined surface 4823. The inclination between the first inclined surface 4822 and the second inclined surface 4823 may differ up to 30°, in particular up to 15°, particularly preferred up to 5°. The first inclined surface 4822 may be formed to face a movement direction of the first movable cam 2910 when the hinge structure is moved from the fully folded state to the flat state. The second inclined surface 4823 may be disposed to face an opposite direction to the first inclined surface 4822. The second inclined surface 4823 may be formed to face a movement direction of the movable cam 4910 when the hinge structure is moved from the flat state to the fully folded state.

According to an embodiment, the movable cam 4910 may include a second ridge (or the second boss) 4911 and a second valley 4912. The second ridge 4911 may include a second protruding surface 4921, a third inclined surface 4922, and a fourth inclined surface 4923. The second protruding surface 4921 may protrude toward an opposite direction to the first protruding surface 4821. The second protruding surface 4921 may protrude from the first movable rail 2340 of the second detent member 2310 toward the first fixed rail 2240 of the fixing bracket 2210. At least a portion, in particular at least 50 percent, particularly preferred at least 75 percent, of the second protruding surface 4921 may be formed flat. The fourth inclined surface 4923 may be formed to face a movement direction of the movable cam 4910 when the hinge structure is moved from the flat state to the fully folded state. The third inclined surface 4922 may be disposed to face an opposite direction to the fourth inclined surface 4923. The third inclined surface 4922 may be formed to face a movement direction of the movable cam 4910 when the hinge structure is moved from the fully folded state to the flat state.

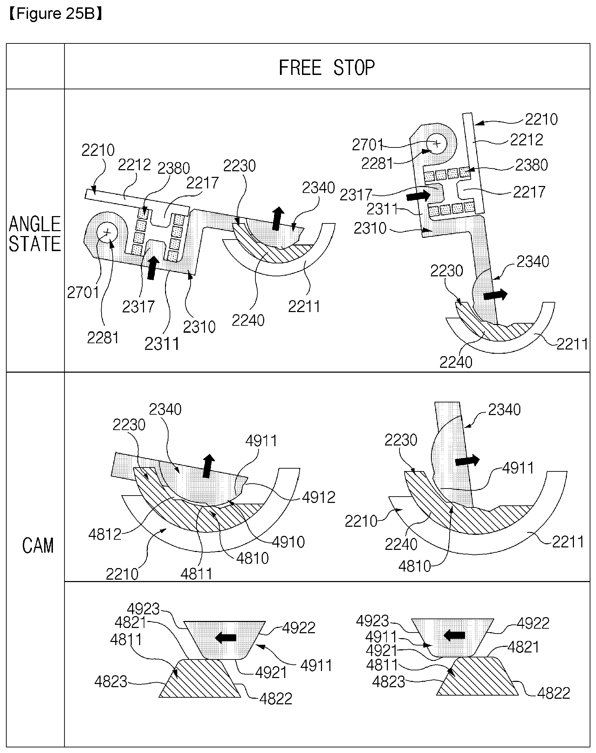

As illustrated in FIG. 25A, when the hinge structure is in the flat state, the first ridge 4811 of the fixed cam 4810 may be disposed to be engaged with the second valley 4912 of the movable cam 4910, and the first valley 4812 of the fixed cam 4810 may be disposed to be engaged with the second ridge 4911 of the movable cam 4910. The first inclined surface 4822 of the fixed cam 4810 may contact the fourth inclined surface 4923 of the movable cam 4910. Because the first inclined surface 4822 and the fourth inclined surface 4923 are engaged with each other, the fixed cam 4810 may restrict movement of the movable cam 4910 when the hinge structure is in the flat state. For example, the movable cam 4910 may not be moved in the clockwise direction or the counterclockwise direction along the second path (e.g., the second path P22 of FIG. 24). Then, the first detent plate 2311 of the first detent member 2310 may be spaced apart from the first coupling area 2211 of the first rotary member 2210 by the first interval (e.g., the first interval L1 of FIG. 7A). The elastic member 2380 may be in a compression state, in which a specific elastic force may be applied to the first rotary member 2210. For example, the elastic member 2380 may be in a prolonged state as compared with the free stop state illustrated in FIG. 25B. Accordingly, the hinge structure may provide a detent function for maintaining the flat state while not moving to the free stop state. The hinge structure may provide a detent function of enduring a repulsive force (or a force of folding the display in the flat state) of the display.

As illustrated in FIG. 25B, when the hinge structure is moved from the flat state to the free stop state, the first detent member 2310 may be moved toward the first protruding surface 4821 of the first ridge 4811 along the first inclined surface 4822 of the first ridge 4811 due to rotation of the first rotary member 2210. At least a portion of the first protruding surface 4821 of the first fixing bracket 2230 and at least a portion of the second protruding surface 4921 of the first detent member 2310 may be in a surface-contact state. Then, because the first detent member 2310 is moved while the first fixing pin 2281 is taken as a rotation axis, the first detent plate 2311 of the first detent member 2310 may compress the first elastic member 2380 toward the first rotary member 2210. For example, the first elastic member 2380 may be a state, in which it is compressed more compared with in the fully folded state or the flat state. In the free stop state, the first elastic member 2380 may be maximally compressed as compared with the case of the fully folded state or the flat state. The compressed first elastic member 2380 may increase a frictional force between the fixed cam 4810 and the movable cam 4910, and the increased frictional force may provide a torque that may maintain the hinge structure in a specific state.

According to an embodiment, the hinge structure may require a relatively strong force such that the first elastic member 2380 is compressed to move the electronic device from the fully folded state or the flat state to the free stop state. Accordingly, when a force relatively higher than a force for maintaining the hinge structure in the fully folded state and/or the flat state is applied to, the hinge structure may be moved from the fully folded state and/or the flat state to the free stop state.

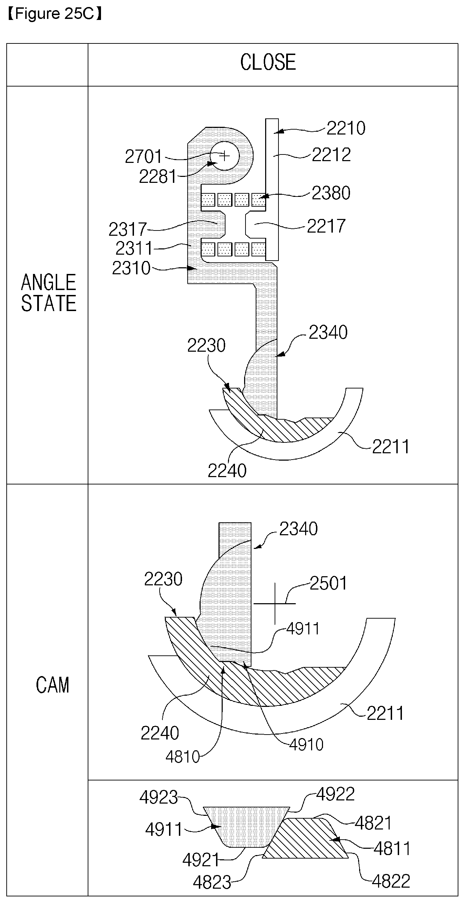

As illustrated in FIG. 25C, when the hinge structure is in the fully folded state (or a state, in which the hinge structure is folded at about 0 degrees), the movable cam 4910 may be moved toward the first valley 4812 of the fixed cam 4810 along the first protruding surface 4821 and the first inclined surface 4822. When the hinge structure is in the fully folded state (or the hinge structure is folded at about 0 degrees), the first ridge 4811 of the fixed cam 4810 may be disposed to be engaged with the second valley 4912 of the movable cam 4910, and the first valley 4812 of the fixed cam 4810 may be disposed to be engaged with the second ridge 4911 of the movable cam 4910. The second inclined surface 4823 of the first ridge 4811 may contact the third inclined surface 4922 of the second ridge 4911. Because the second inclined surface 4823 and the third inclined surface 4922 are engaged with each other, the hinge structure may provide a detent function of maintaining the fully folded state while not being moved to the free stop state. Then, because the first elastic member 2380 is prolonged as compared with the free stop state, it may have a larger length than in the free stop state.

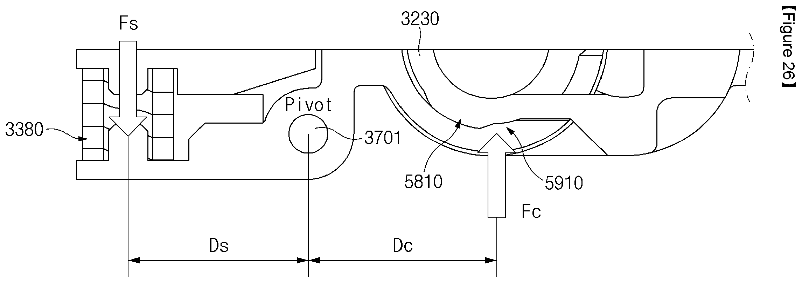

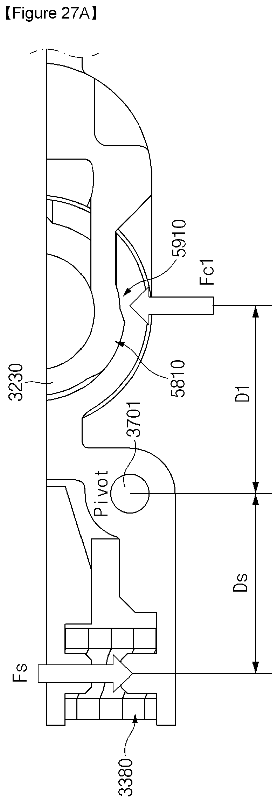

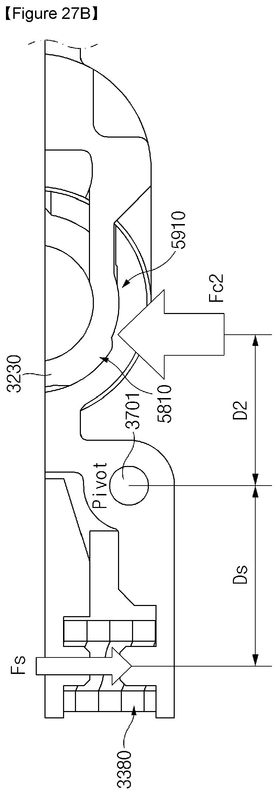

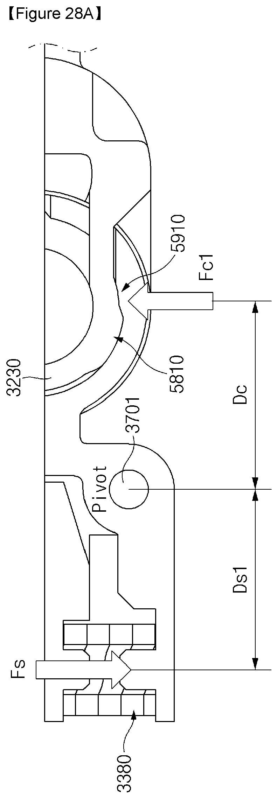

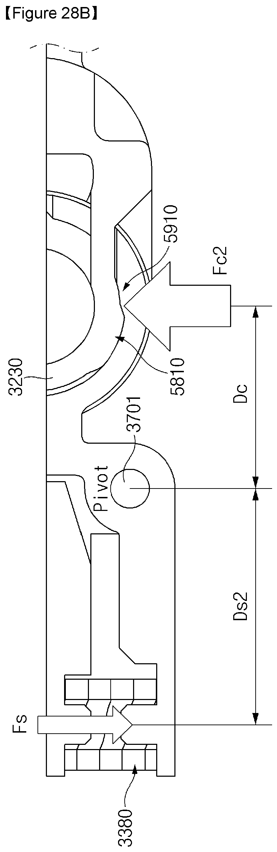

FIG. 26 is a view illustrating a relationship between a pressure of the elastic member and a pressure of the cam according to an embodiment. FIGS. 27A and 27B are views illustrating a change in a pressure of a cam according to spacing distances between a fixed shaft and cams according to an embodiment. FIGS. 28A and 28B are views illustrating a change in a pressure of the cam according to a spacing distance between the elastic member and the fixed shaft according to an embodiment.

Referring to FIG. 26, a load (or a pressure of an elastic member) applied to an elastic member 3380 and a load (or a pressure of a cam) applied to cams 5810 and 5910 may be as in Equation 3. $Fs \times Ds = Dc \times Fc$

In Equation 3, Fs may mean a load applied to the elastic member 3380, Fc may mean a load applied to a movable cam 5910 engaged with a fixed cam 5810, Ds may mean a distance between a fixing pin 3701 used as a rotation axis and the elastic member 3380, and Dc may mean a distance between the fixing pin 3701 and the cams 5810 and 5910.

According to an embodiment, when the load Fs applied to the elastic member 3380 and the distance Ds between the fixing pin 3701 and the elastic member 3380 are constant, a pressure applied to the movable cam 5910 may increase as the movable cam 5910 engaged with the fixed cam 5810 becomes closer to the fixing pin 3701 (or as the distance Dc between the fixing pin 3701 and the movable cam 5910 becomes smaller). For example, in the embodiment illustrated in FIG. 27A, the movable cam 5910 may be spaced apart from the fixing pin 3701 by a first distance D1, and in the embodiment illustrated in FIG. 27B, the movable cam 5910 may be spaced apart from the fixing pin 3701 by a second distance D2 that is smaller than the first distance D1. As compared with a first load Fc1 applied to the movable cam 5910 of the embodiment illustrated in FIG. 27A, a second load Fc2 applied to the movable cam 5910 of the embodiment illustrated in FIG. 27B may be low. The second load Fc2 may become higher than the first load Fc1 in proportion to a different between the first distance D1 and the second distance D2. Due to the increased second load Fc, a frictional force between the movable cam 5910 and the fixed cam 5810 of the embodiment illustrated in FIG. 27B may be increased. In proportion to the increased frictional force, a detent force for maintaining the hinge structure of the embodiment illustrated in FIG. 27B in a specific state may be enhanced.

According to an embodiment, when the load Fs applied to the elastic member 3380 and the distance Dc between the fixing pin 3701 and the movable cam 5910 is constant, a pressure applied to the movable cam 5910 may increase as the elastic member 3380 becomes farther from the fixing pin 3701. For example, in the embodiment illustrated in FIG. 28A, the elastic member 3380 may be spaced apart from the fixing pin 3701 by a third distance Ds1, and in the embodiment illustrated in FIG. 28B, the elastic member 3380 may be spaced apart from the fixing pin 3701 by a fourth distance Ds2 that is longer than the third distance Ds1. As compared with the first load Fc1 applied to the movable cam 5910 of the embodiment illustrated in FIG. 28A, the second load Fc2 applied to the movable cam 5910 of the embodiment illustrated in FIG. 28B may be increased. The second load Fc2 may become higher than the first load Fc1 in proportion to a difference between the third distance Ds1 and the fourth distance Ds2. Due to the increased second load Fc, a frictional force between the movable cam 5910 and the fixed cam 5810 of the embodiment illustrated in FIG. 28B may be increased. In proportion to the increased frictional force, a detent force for maintaining the hinge structure of the embodiment illustrated in FIG. 28B in a specific state may be enhanced.

The hinge structures of the above-described foldable electronic device are not limited to the above-described embodiments, and the hinge structures described in the drawings may be applied mutually complexly. For example, according to the foldable electronic device according to an embodiment, only the plurality of hinge structures described in FIGS. 3 to 5 may be employed, only the hinge structures described in FIGS. 21 to 23 may be employed, or the hinge structures described in FIGS. 3 to 5 and the hinge structures described in FIGS. 21 to 23 may be complexly employed.

Furthermore, at least one of the number of the elastic members described in FIGS. 13A to 13C, the structures of the wire diameters and diameters of the elastic members described in FIG. 15, the area of the cam described in FIG. 16, and the structures of the movable cam and the fixed cam described in FIGS. 18 to 20 may be applied to at least any one of the hinge structures described in FIGS. 3 to 5 and the hinge structures described in FIGS. 21 to 23. Furthermore, the pressure of the cam described in FIGS. 26 to 28 also may be applied to at least any one of the hinge structures described in FIGS. 3 and 5 and the hinge structures described in FIGS. 21 to 23. The invention is not limited to the disclosed exemplary embodiments, but by the scope of the following claims.

## Claims

1. A hinge structure (200) for connecting a first housing (110) and a second housing (120) of a foldable electronic device (100) comprising:
a fixing bracket (230) disposable between the first housing (110) and the second housing (120), including a first fixed rail (240), at least a portion of which has a curved shape, and a second fixed rail (250), at least a portion of which has a curved shape;
a first rotary member (210) connectable to the first housing (110), configured to be rotatable together with the first housing (110) and including a first coupling area (211) that is rotated about a first rotation axis (501) in an area that overlaps the first fixed rail (240);
a second rotary member (220) connectable to the second housing (120), configured to be rotatable together with the second housing (120) and including a second coupling area (221) that is rotated about a second rotation axis (502) in an area that overlaps the second fixed rail (250);
a first detent member (310) facing the first fixed rail (240) and including a first movable rail (340), which is rotated along the first fixed rail (240) and at least a portion of which has a curved shape;
a second detent member (320) facing the second fixed rail (250) and including a second movable rail (350), which is rotated along the second fixed rail (250) and at least a portion of which has a curved shape;
a first cam structure (800) configured such that a first fixed cam (810) formed in the at least one portion of the first fixed rail (240), which has a curved shape, and a first movable cam (910) formed in the at least one portion of the first movable rail (340), which has a curved shape, contact each other;
and a second cam structure configured such that a second fixed cam (820) formed in the at least one portion of the second fixed rail (250), which has a curved shape, and a second movable cam formed in the at least one portion of the second movable rail (350), which has a curved shape, contact each other.

2. A foldable electronic device (100) comprising:
a first housing (110);
a second housing (120);
a flexible display (140), at least a portion of which is seated in the first housing (110) and the second housing (120); and
the hinge structure (200) according to claim 1 connecting the first housing (110) and the second housing (120),
wherein the fixing bracket (230) is disposed between the first housing (110) and the second housing (120),
the first rotary member (210) is connected to the first housing (110) and configured to be rotated together with the first housing (110) and
the second rotary member (220) is connected to the second housing (120) and configured to be rotated together with the second housing (120).

3. The foldable electronic device (100) of claim 2, wherein the first fixed rail (240) of the fixing bracket (230) is disposed to surround at least a portion of the first coupling area (211) of the first rotary member (210), and the first movable rail (340) of the first detent member (310) is disposed to surround at least a portion of the first fixed rail (240), and
wherein the second fixed rail (250) of the fixing bracket (230) is disposed to surround at least a portion of the second coupling area (221) of the second rotary member (220), and the second movable rail (350) of the second detent member (320) is disposed to surround at least a portion of the second fixed rail (250).

4. The foldable electronic device (100) of claim 2 or 3, wherein the first fixed cam (810) is formed on a first rail outer-surface (242) of the first fixed rail (240) that faces the first detent member (310), and the first movable cam (910) is rotated along the first rail outer-surface (242) of the first fixed rail (240) while being engaged with the first fixed cam (810), and
wherein the second fixed cam (820) is formed on a second rail outer-surface (252) of the second fixed rail (250) that faces the second detent member (320), and the second movable cam is rotated along the second rail outer-surface (252) of the second fixed rail (250) while being engaged with the second fixed cam (820).

5. The foldable electronic device (100) of claim 2, wherein the first fixed rail (240) of the fixing bracket (230) is disposed to surround at least a portion of the first movable rail (340) of the first detent member (310), and the second fixed rail (250) of the fixing bracket (230) is disposed to surround at least a portion of the second movable rail (350) of the second detent member (320), and
wherein the first coupling area (211) of the first rotary member (210) is disposed to surround at least a portion of the first fixed rail (240), and the second coupling area (221) of the second rotary member (220) is disposed to surround at least a portion of the second fixed rail (250).

6. The foldable electronic device (100) of claim 5, wherein the first fixed cam (810) is formed on a first rail inner-surface (241) of the first fixed rail (240) that faces the first detent member (310), and the first movable cam (910) is rotated along the first rail inner-surface (241) of the first fixed rail (240) while being engaged with the first fixed cam (810), and
wherein the second fixed cam (820) is formed on a second rail inner-surface (251) of the second fixed rail (250) that faces the second detent member (320), and the second movable cam is rotated along the second rail inner-surface (251) of the second fixed rail (250) while being engaged with the second fixed cam (820).

7. The foldable electronic device (100) of any one of claims 2 to 6, wherein the first rotary member (210) further includes a first extension area (212) extending from the first coupling area (211),
wherein the second rotary member (220) further includes a second extension area (222) extending from the second coupling area (221),
wherein the first detent member (310) further includes a first detent plate (311) facing the first extension area (212), and
wherein the second detent member (320) further includes a second detent plate (321) facing the second extension area (222).

8. The foldable electronic device (100) of claim 7, further comprising:
a first elastic member (380) disposed between the first extension area (212) and the first detent plate (311); and
a second elastic member (390) disposed between the second extension area (222) and the second detent plate (321).

9. The foldable electronic device (100) of claim 8, further comprising:
a first fixing pin (281) inserted into a first fastening hole (218) formed in the first extension area (212) and a first fixing hole (318) formed in the first detent plate (311); and
a second fixing pin (291) inserted into a second fastening hole (228) formed in the second extension area (222) and a second fixing hole (328) formed in the second detent plate (321).

10. The foldable electronic device (100) of claim 9, wherein the first detent plate (311) is moved toward the first extension area (212) with respect to a first central axis (701) of the first fixing pin (281) to compress the first elastic member (380), and
wherein the second detent plate (321) is moved toward the second extension area (222) with respect to a second central axis of the second fixing pin (291) to compress the second elastic member (390).

11. The foldable electronic device (100) of any one of claims 8 to 10, wherein the flexible display (140) includes:
a first area (141), at least a portion of which is disposed in the first housing (110) and which is formed of a flat surface;
a second area (142), at least a portion of which is disposed in the second housing (120) and which is formed of a flat surface; and
a folding area (143) formed between the first area (141) and the second area (142), and
wherein the electronic device (100) includes:
a flat state, in which the folding area (143) is a flat surface;
a fully folded state, in which the folding area (143) has a maximum curvature; and
a free stop state defined between the flat state and the fully folded state.

12. The foldable electronic device (100) of claim 11, wherein the first elastic member (380) and
the second elastic member (390) are further compressed in the free stop state than in the flat state and the fully folded state.

13. The foldable electronic device (100) of any one of claims 2 to 12, further comprising
a hinge housing (130), in which at least a portion of the hinge structure (200) is disposed in an interior thereof,
wherein at least any one of the first elastic member (380) and the second elastic member (390) does not overlap the hinge housing (130).

14. The foldable electronic device (100) of any one of claims 2 to 13, wherein at least one of the first cam structure (800) and the second cam structure includes:
a fixed cam formed in the fixing bracket (230) and including at least one first ridge (811) and at least one first valley (812); and
a movable cam formed in at least one of the first detent member (310) and the second detent member (320), engaged with the fixed cam, and including at least one second ridge (911) and at least one second valley (912).

15. The foldable electronic device (100) of claim 14, wherein the first ridge (811) includes a flat or inclined bossed surface and/or two bossed surfaces.

## Patentansprüche

1. Scharnierstruktur (200) zum Verbinden eines ersten Gehäuses (110) und eines zweiten Gehäuses (120) einer klappbaren elektronischen Vorrichtung (100), umfassend:
einen Befestigungshalter (230), der zwischen dem ersten Gehäuse (110) und dem zweiten Gehäuse (120) anordenbar ist und eine erste feste Schiene (240), von der zumindest ein Abschnitt eine gekrümmte Form aufweist, und eine zweite feste Schiene (250), von der zumindest ein Abschnitt eine gekrümmte Form aufweist, aufweist;
ein erstes Drehelement (210), das mit dem ersten Gehäuse (110) verbindbar ist, dazu konfiguriert ist, zusammen mit dem ersten Gehäuse (110) drehbar zu sein, und einen ersten Kopplungsbereich (211) aufweist, der um eine erste Drehachse (501) in einem Bereich gedreht wird, der die erste feste Schiene (240) überlappt;
ein zweites Drehelement (220), das mit dem zweiten Gehäuse (120) verbindbar ist, dazu konfiguriert ist, zusammen mit dem zweiten Gehäuse (120) drehbar zu sein, und einen zweiten Kopplungsbereich (221) aufweist, der um eine zweite Drehachse (502) in einem Bereich gedreht wird, der die zweite feste Schiene (250) überlappt;
ein erstes Arretierungselement (310), das der ersten festen Schiene (240) zugewandt ist und eine erste bewegliche Schiene (340) aufweist, die entlang der ersten festen Schiene (240) gedreht wird und von der zumindest ein Abschnitt eine gekrümmte Form aufweist;
ein zweites Arretierungselement (320), das der zweiten festen Schiene (250) zugewandt ist und eine zweite bewegliche Schiene (350) aufweist, die entlang der zweiten festen Schiene (250) gedreht wird und von der zumindest ein Abschnitt eine gekrümmte Form aufweist;
eine erste Nockenstruktur (800), die derart konfiguriert ist, dass ein erster fester Nocken (810), der in dem zumindest einen Abschnitt der ersten festen Schiene (240), der eine gekrümmte Form aufweist, ausgebildet ist, und ein erster beweglicher Nocken (910), der in dem zumindest einen Abschnitt der ersten beweglichen Schiene (340), der eine gekrümmte Form aufweist, ausgebildet ist, miteinander in Kontakt stehen;
und eine zweite Nockenstruktur, die derart konfiguriert ist, dass ein zweiter fester Nocken (820), der in dem zumindest einen Abschnitt der zweiten festen Schiene (250), der eine gekrümmte Form aufweist, ausgebildet ist, und ein zweiter beweglicher Nocken, der in dem zumindest einen Abschnitt der zweiten beweglichen Schiene (350), der eine gekrümmte Form aufweist, ausgebildet ist, miteinander in Kontakt stehen.

2. Klappbare elektronische Vorrichtung (100), umfassend:
ein erstes Gehäuse (110);
ein zweites Gehäuse (120);
eine flexible Anzeige (140), von der zumindest ein Abschnitt in dem ersten Gehäuse (110) und dem zweiten Gehäuse (120) aufgenommen ist; und
die Scharnierstruktur (200) nach Anspruch 1, die das erste Gehäuse (110) und das zweite Gehäuse (120) verbindet,
wobei der Befestigungshalter (230) zwischen dem ersten Gehäuse (110) und dem zweiten Gehäuse (120) angeordnet ist,
das erste Drehelement (210) mit dem ersten Gehäuse (110) verbunden und dazu konfiguriert ist, zusammen mit dem ersten Gehäuse (110) gedreht zu werden, und
das zweite Drehelement (220) mit dem zweiten Gehäuse (120) verbunden und dazu konfiguriert ist, zusammen mit dem zweiten Gehäuse (120) gedreht zu werden.

3. Klappbare elektronische Vorrichtung (100) nach Anspruch 2, wobei die erste feste Schiene (240) des Befestigungshalters (230) dazu angeordnet ist, zumindest einen Abschnitt des ersten Kopplungsbereichs (211) des ersten Drehelements (210) zu umgeben, und die erste bewegliche Schiene (340) des ersten Arretierungselements (310) dazu angeordnet ist, zumindest einen Abschnitt der ersten festen Schiene (240) zu umgeben, und
wobei die zweite feste Schiene (250) des Befestigungshalters (230) dazu angeordnet ist, zumindest einen Abschnitt des zweiten Kopplungsbereichs (221) des zweiten Drehelements (220) zu umgeben, und die zweite bewegliche Schiene (350) des zweiten Arretierungselements (320) dazu angeordnet ist, zumindest einen Abschnitt der zweiten festen Schiene (250) zu umgeben.

4. Klappbare elektronische Vorrichtung (100) nach Anspruch 2 oder 3, wobei der erste feste Nocken (810) auf einer ersten Schienenaußenfläche (242) der ersten festen Schiene (240), die dem ersten Arretierungselement (310) zugewandt ist, ausgebildet ist, und der erste bewegliche Nocken (910) entlang der ersten Schienenaußenfläche (242) der ersten festen Schiene (240) gedreht wird, während er mit dem ersten festen Nocken (810) in Eingriff steht, und
wobei der zweite feste Nocken (820) auf einer zweiten Schienenaußenfläche (252) der zweiten festen Schiene (250), die dem zweiten Arretierungselement (320) zugewandt ist, ausgebildet ist, und der zweite bewegliche Nocken entlang der zweiten Schienenaußenfläche (252) der zweiten festen Schiene (250) gedreht wird, während er mit dem zweiten festen Nocken (820) in Eingriff steht.

5. Klappbare elektronische Vorrichtung (100) nach Anspruch 2, wobei die erste feste Schiene (240) des Befestigungshalters (230) dazu angeordnet ist, zumindest einen Abschnitt der ersten beweglichen Schiene (340) des ersten Arretierungselements (310) zu umgeben, und die zweite feste Schiene (250) des Befestigungshalters (230) dazu angeordnet ist, zumindest einen Abschnitt der zweiten beweglichen Schiene (350) des zweiten Arretierungselements (320) zu umgeben, und
wobei der erste Kopplungsbereich (211) des ersten Drehelements (210) dazu angeordnet ist, zumindest einen Abschnitt der ersten festen Schiene (240) zu umgeben, und der zweite Kopplungsbereich (221) des zweiten Drehelements (220) dazu angeordnet ist, zumindest einen Abschnitt der zweiten festen Schiene (250) zu umgeben.

6. Klappbare elektronische Vorrichtung (100) nach Anspruch 5, wobei der erste feste Nocken (810) auf einer ersten Schieneninnenfläche (241) der ersten festen Schiene (240), die dem ersten Arretierungselement (310) zugewandt ist, ausgebildet ist, und der erste bewegliche Nocken (910) entlang der ersten Schieneninnenfläche (241) der ersten festen Schiene (240) gedreht wird, während er mit dem ersten festen Nocken (810) in Eingriff steht, und
wobei der zweite feste Nocken (820) auf einer zweiten Schieneninnenfläche (251) der zweiten festen Schiene (250), die dem zweiten Arretierungselement (320) zugewandt ist, ausgebildet ist, und der zweite bewegliche Nocken entlang der zweiten Schieneninnenfläche (251) der zweiten festen Schiene (250) gedreht wird, während er mit dem zweiten festen Nocken (820) in Eingriff steht.

7. Klappbare elektronische Vorrichtung (100) nach einem der Ansprüche 2 bis 6, wobei das erste Drehelement (210) ferner einen ersten Erweiterungsbereich (212) aufweist, der sich von dem ersten Kopplungsbereich (211) aus erstreckt,
wobei das zweite Drehelement (220) ferner einen zweiten Erweiterungsbereich (222) aufweist, der sich von dem zweiten Kopplungsbereich (221) aus erstreckt,
wobei das erste Arretierungselement (310) ferner eine erste Arretierungsplatte (311) aufweist, die dem ersten Erweiterungsbereich (212) zugewandt ist, und
wobei das zweite Arretierungselement (320) ferner eine zweite Arretierungsplatte (321) aufweist, die dem zweiten Erweiterungsbereich (222) zugewandt ist.

8. Klappbare elektronische Vorrichtung (100) nach Anspruch 7, ferner umfassend:
ein erstes elastisches Element (380), das zwischen dem ersten Erweiterungsbereich (212) und der ersten Arretierungsplatte (311) angeordnet ist; und
ein zweites elastisches Element (390), das zwischen dem zweiten Erweiterungsbereich (222) und der zweiten Arretierungsplatte (321) angeordnet ist.

9. Klappbare elektronische Vorrichtung (100) nach Anspruch 8, ferner umfassend:
einen ersten Befestigungsstift (281), der in ein erstes Befestigungsloch (218), das in dem ersten Erweiterungsbereich (212) ausgebildet ist, und in ein erstes Fixierloch (318), das in der ersten Arretierungsplatte (311) ausgebildet ist, eingesetzt ist; und
einen zweiten Befestigungsstift (291), der in ein zweites Befestigungsloch (228), das in dem zweiten Erweiterungsbereich (222) ausgebildet ist, und in ein zweites Fixierloch (328), das in der zweiten Arretierungsplatte (321) ausgebildet ist, eingesetzt ist.

10. Klappbare elektronische Vorrichtung (100) nach Anspruch 9, wobei die erste Arretierungsplatte (311) bezüglich einer ersten Mittelachse (701) des ersten Befestigungsstifts (281) in Richtung auf den ersten Erweiterungsbereich (212) bewegt wird, um das erste elastische Element (380) zusammenzudrücken, und
wobei die zweite Arretierungsplatte (321) bezüglich einer zweiten Mittelachse des zweiten Befestigungsstifts (291) in Richtung auf den zweiten Erweiterungsbereich (222) bewegt wird, um das zweite elastische Element (390) zusammenzudrücken.

11. Klappbare elektronische Vorrichtung (100) nach einem der Ansprüche 8 bis 10, wobei die flexible Anzeige (140) aufweist:
einen ersten Bereich (141), von dem zumindest ein Abschnitt in dem ersten Gehäuse (110) angeordnet ist und der als eine ebene Fläche ausgebildet ist;
einen zweiten Bereich (142), von dem zumindest ein Abschnitt in dem zweiten Gehäuse (120) angeordnet ist und der als eine ebene Fläche ausgebildet ist; und
einen Klappbereich (143), der zwischen dem ersten Bereich (141) und dem zweiten Bereich (142) ausgebildet ist, und
wobei die elektronische Vorrichtung (100) aufweist:
einen flachen Zustand, in dem der Klappbereich (143) eine ebene Fläche ist;
einen vollständig geklappten Zustand, in dem der Klappbereich (143) eine maximale Krümmung aufweist; und
einen Freihaltezustand, der zwischen dem flachen Zustand und dem vollständig geklappten Zustand definiert ist.

12. Klappbare elektronische Vorrichtung (100) nach Anspruch 11, wobei das erste elastische Element (380) und das zweite elastische Element (390) in dem Freihaltezustand weiter zusammengedrückt sind als in dem flachen Zustand und dem vollständig geklappten Zustand.

13. Klappbare elektronische Vorrichtung (100) nach einem der Ansprüche 2 bis 12, ferner umfassend:
ein Scharniergehäuse (130), in dem zumindest ein Abschnitt der Scharnierstruktur (200) in seinem Inneren angeordnet ist,
wobei zumindest eines von dem ersten elastischen Element (380) und dem zweiten elastischen Element (390) das Scharniergehäuse (130) nicht überlappt.

14. Klappbare elektronische Vorrichtung (100) nach einem der Ansprüche 2 bis 13, wobei zumindest eine von der ersten Nockenstruktur (800) und der zweiten Nockenstruktur aufweist:
einen festen Nocken, der in dem Befestigungshalter (230) ausgebildet ist und zumindest einen ersten Vorsprung (811) und zumindest ein erstes Tal (812) aufweist; und
einen beweglichen Nocken, der in zumindest einem von dem ersten Arretierungselement (310) und dem zweiten Arretierungselement (320) ausgebildet ist, mit dem festen Nocken in Eingriff steht und zumindest einen zweiten Vorsprung (911) und zumindest ein zweites Tal (912) aufweist.

15. Klappbare elektronische Vorrichtung (100) nach Anspruch 14, wobei der erste Vorsprung (811) eine ebene oder geneigte bossierte Fläche und/oder zwei bossierte Flächen aufweist.

## Revendications

1. Structure de charnière (200) pour relier un premier boîtier (110) et un second boîtier (120) d'un dispositif électronique pliable (100) comprenant :
un support de fixation (230) permettant d'être disposé entre le premier boîtier (110) et le second boîtier (120), incluant un premier rail fixe (240) dont au moins une partie présente une forme courbée, et un second rail fixe (250) dont au moins une partie présente une forme courbée ;
un premier élément rotatif (210) permettant d'être relié au premier boîtier (110), configuré pour être rotatif avec le premier boîtier (110) et incluant une première zone de couplage (211) qui tourne autour d'un premier axe de rotation (501) dans une zone qui chevauche le premier rail fixe (240) ;
un second élément rotatif (220) permettant d'être relié au second boîtier (120), configuré pour être rotatif avec le second boîtier (120) et incluant une seconde zone de couplage (221) qui tourne autour d'un second axe de rotation (502) dans une zone qui chevauche le second rail fixe (250) ;
un premier élément de verrouillage (310) faisant face au premier rail fixe (240) et incluant un premier rail mobile (340), qui tourne le long du premier rail fixe (240) et dont au moins une partie présente une forme courbée ;
un second élément de verrouillage (320) faisant face au second rail fixe (250) et incluant un second rail mobile (350), qui tourne le long du second rail fixe (250) et dont au moins une partie présente une forme courbée ;
une première structure de came (800) configurée de manière à ce qu'une première came fixe (810) est formée dans ladite au moins une partie du premier rail fixe (240), qui présente une forme courbée, et qu'une première came mobile (910) est formée dans ladite au moins une partie du premier rail mobile (340), qui présente une forme courbée, en contact l'une avec l'autre ; et
une seconde structure de came configurée de manière à ce qu'une seconde came fixe (820) est formée dans ladite au moins une partie du second rail fixe (250), qui présente une forme courbée, et qu'une seconde came mobile est formée dans ladite au moins une partie du second rail mobile (350), qui présente une forme courbée, en contact l'une avec l'autre.

2. Dispositif électronique pliable (100), comprenant :
un premier boîtier (110) ;
un second boîtier (120) ;
un écran flexible (140) dont au moins une partie est située dans le premier boîtier (110) et le second boîtier (120) ; et
une structure de charnière (200) selon la revendication 1 reliant le premier boîtier (110) et le second boîtier (120),
dans lequel le support de fixation (230) est disposé entre le premier boîtier (110) et le second boîtier (120),
le premier élément rotatif (210) est relié au premier boîtier (110) et configuré pour tourner avec le premier boîtier (110) et
le second élément rotatif (220) est relié au second boîtier (120) et configuré pour tourner avec le second boîtier (120).

3. Dispositif électronique pliable (100) selon la revendication 2, dans lequel le premier rail fixe (240) du support de fixation (230) est disposé pour entourer au moins une partie de la première zone de couplage (211) du premier élément rotatif (210), et le premier rail mobile (340) du premier élément de verrouillage (310) est disposé pour entourer au moins une partie du premier rail fixe (240), et
dans lequel le second rail fixe (250) du support de fixation (230) est disposé pour entourer au moins une partie de la seconde zone de couplage (221) du second élément rotatif (220), et le second rail mobile (350) du second élément de verrouillage (320) est disposé pour entourer au moins une partie du second rail fixe (250).

4. Dispositif électronique pliable (100) selon la revendication 2 ou 3, dans lequel la première came fixe (810) est formée sur une première surface externe de rail (242) du premier rail fixe (240) qui fait face au premier élément de verrouillage (310), et la première came mobile (910) tourne le long de la première surface externe de rail (242) du premier rail fixe (240) tout en s'engageant avec la première came fixe (810), et
dans lequel la seconde came fixe (820) est formée sur une seconde surface externe de rail (252) du second rail fixe (250) qui fait face au second élément de verrouillage (320), et la seconde came mobile tourne le long de la seconde surface externe de rail (252) du second rail fixe (250) tout en s'engageant avec la seconde came fixe (820).

5. Dispositif électronique pliable (100) selon la revendication 2, dans lequel le premier rail fixe (240) du support de fixation (230) est disposé pour entourer au moins une partie du premier rail mobile (340) du premier élément de verrouillage (310), et le second rail fixe (250) du support de fixation (230) est disposé pour entourer au moins une partie du second rail mobile (350) du second élément de verrouillage (320), et
dans lequel la première zone de couplage (211) du premier élément rotatif (210) est disposée pour entourer au moins une partie du premier rail fixe (240), et la seconde zone de couplage (221) du second élément rotatif (220) est disposée pour entourer au moins une partie du second rail fixe (250).

6. Dispositif électronique pliable (100) selon la revendication 5, dans lequel la première came fixe (810) est formée sur une première surface interne de rail (241) du premier rail fixe (240) qui fait face au premier élément de verrouillage (310), et la première came mobile (910) tourne le long de la première surface interne de rail (241) du premier rail fixe (240) tout en s'engageant avec la première came fixe (810), et
dans lequel la seconde came fixe (820) est formée sur une seconde surface interne de rail (251) du second rail fixe (250) qui fait face au second élément de verrouillage (320), et la seconde came mobile tourne le long de la seconde surface interne de rail (251) du second rail fixe (250) tout en s'engageant avec la seconde came fixe (820).

7. Dispositif électronique pliable (100) selon l'une quelconque des revendications 2 à 6, dans lequel le premier élément rotatif (210) inclut en outre une première zone d'extension (212) s'étendant à partir de la première zone de couplage (211),
dans lequel le second élément rotatif (220) inclut en outre une seconde zone d'extension (222) s'étendant à partir de la seconde zone de couplage (221),
dans lequel le premier élément de verrouillage (310) inclut en outre une première plaque de verrouillage (311) faisant face à la première zone d'extension (212), et
dans lequel le second élément de verrouillage (320) inclut en outre une seconde plaque de verrouillage (321) faisant face à la seconde zone d'extension (222).

8. Dispositif électronique pliable (100) selon la revendication 7, comprenant en outre :
un premier élément élastique (380) disposé entre la première zone d'extension (212) et la première plaque de verrouillage (311) ; et
un second élément élastique (390) disposé entre la seconde zone d'extension (222) et la seconde plaque de verrouillage (321).

9. Dispositif électronique pliable (100) selon la revendication 8, comprenant en outre :
une première goupille de fixation (281) insérée dans un premier trou de serrage (218) formé dans la première zone d'extension (212) et un premier trou de fixation (318) formé dans la première plaque de verrouillage (311) ; et
une seconde goupille de fixation (291) insérée dans un second trou de serrage (228) formé dans la seconde zone d'extension (222) et un second trou de fixation (328) formé dans la seconde plaque de verrouillage (321).

10. Dispositif électronique pliable (100) selon la revendication 9, dans lequel la première plaque de verrouillage (311) se déplace vers la première zone d'extension (212) par rapport à un premier axe central (701) de la première goupille de fixation (281) pour comprimer le premier élément élastique (380), et
dans lequel la seconde plaque de verrouillage (321) se déplace vers la seconde zone d'extension (222) par rapport à un second axe central de la seconde goupille de fixation (291) pour comprimer le second élément élastique (390).

11. Dispositif électronique pliable (100) selon l'une quelconque des revendications 8 à 10, dans lequel l'écran flexible (140) inclut :
une première zone (141) dont au moins une partie est disposée dans le premier boîtier (110) et qui est formée d'une surface plate ;
une seconde zone (142) dont au moins une partie est disposée dans le second boîtier (120) et qui est formée d'une surface plate ; et
une zone de pliage (143) formée entre la première zone (141) et la seconde zone (142), et
dans lequel le dispositif électronique (100) inclut :
un état plat, dans lequel la zone de pliage (143) est une surface plate ;
un état complètement plié, dans lequel la zone de pliage (143) présente une courbure maximale ; et
un état d'arrêt libre défini entre l'état plat et l'état complètement plié.

12. Dispositif électronique pliable (100) selon la revendication 11, dans lequel le premier élément élastique (380) et le second élément élastique (390) sont davantage comprimés dans l'état d'arrêt libre que dans l'état plat et l'état complètement plié.

13. Dispositif électronique pliable (100) selon l'une quelconque des revendications 2 à 12, comprenant en outre :
un boîtier de charnière (130), dans lequel au moins une partie de la structure de charnière (200) est disposée à l'intérieur,
dans lequel au moins l'un quelconque du premier élément élastique (380) et du second élément élastique (390) ne chevauche pas le boîtier de charnière (130).

14. Dispositif électronique pliable (100) selon l'une quelconque des revendications 2 à 13, dans lequel au moins l'une de la première structure de came (800) et de la seconde structure de came inclut :
une came fixe formée dans le support de fixation (230) et incluant au moins une première crête (811) et au moins une première vallée (812) ; et
une came mobile formée dans au moins l'un du premier élément de verrouillage (310) et du second élément de verrouillage (320), engagée avec la came fixe, et incluant au moins une seconde crête (911) et au moins une seconde vallée (912).

15. Dispositif électronique pliable (100) selon la revendication 14, dans lequel la première crête (811) inclut une surface plate ou bosselée inclinée et/ou deux surfaces bosselées.
